# EUROPÄISCHE PATENTSCHRIFT

(11) **EP 3 090 302 B1**
(45) Veröffentlichungstag und Bekanntmachung des Hinweises auf die Patenterteilung: **07.07.2021**
(21) Anmeldenummer: 14836997.8
(22) Anmeldetag: 23.12.2014
(51) Int. Cl.: G02B 30/26, H04N 13/31

(54) **VERFAHREN UND ANORDNUNG ZUR AUTOPARALLAKTISCHEN UND AUTOSTEREOSKOPISCHEN ANZEIGE**
METHOD AND APPARATUS FOR AN AUTOPARALLACTIC AND AUTOSTEREOSCOPIC DISPLAY
METHODE ET DISPOSITIF POUR UN ECRAN AUTOPARALLACTIQUE ET AUTOSTEREOSCOPIQUE

(30) Priorität: 02.01.2014 DE 102014000082; 28.03.2014 DE 102014004821
(43) Veröffentlichungstag der Anmeldung: 09.11.2016
(73) Patentinhaber: Tzschoppe, Wolfgang, 07751 Rothenstein (DE)
(72) Erfinder: Tzschoppe, Wolfgang, 07751 Rothenstein (DE)
(86) Internationale Anmeldenummer: PCT/DE2014/100465
(87) Internationale Veröffentlichungsnummer: WO 2015/101373

(56) Entgegenhaltungen:
- DE-A1-102009 054 706
- DE-B3-102007 045 385
- FR-A1- 2 851 399
- US-A1- 2012 062 991
- KAPLAN S H: "THEORY OF PARALLAX BARRIERS", SMPTE JOURNAL, SMPTE, EASTON, PA, US, vol. 59, no. PART 02, 1 July 1952 (1952-07-01), pages 11-21, XP000645716, ISSN: 0898-0438

## Beschreibung

Die Erfindung bezieht sich auf das Gebiet der räumlichen Darstellung, im Speziellen der ohne Hilfsmittel räumlich wahrnehmbaren Darstellung, der so genannten autoparallaktischen und autostereoskopischen Visualisierung.

Im Stand der Technik haben visuelle Anzeigen unterschiedlicher Art eine nahezu grenzenlose Verbreitung gefunden. Neben Anzeigen mit bildhaften Anzeigeinhalten, wie beispielsweise die Mehrzahl der Anzeigeinhalte von Werbeformaten, gilt dies auch für visuelle Anzeigen mit bildarmen Anzeigeinhalten.

Die Anzeigeinhalte können örtlich und/oder zeitlich variabel oder unveränderlich sein. Es gibt Anzeigen, die das Tageslicht im Durch- oder Auflicht nutzen, die hinterleuchtet sind oder selbst leuchten, die analog oder digital sind, deren Geometrie flächig oder linear ist. Beispiele für Anzeigen mit bildarmen Anzeigeinhalten sind solche mit Warn- oder Hinweiszeichen, mit Symbolen, Buchstaben, Ziffern und/oder komplettem Text. Ein Beispiel sind Uhren mit digitaler Ziffernanzeige. Ein anderes sind lineare Anzeigen mit horizontalen und/oder vertikalen Laufschriften, die beispielsweise als Architekturelement an Fassaden von Gebäuden oder im Innenbereich für Aufmerksamkeit sorgen und die Attraktivität des Bauwerkes erhöhen sollen.

Allen digitalen Anzeigen mit bewegten Anzeigeinhalten ist gemeinsam, dass ihr Anzeigeinhalt durch eine entsprechende Ansteuereinheit erzeugt und bewegt wird. Die Bewegung des Anzeigeinhaltes geschieht unabhängig vom Betrachter der Anzeige. Bekannt sind Ansteuereinheiten, die ein berührungsloses Ein- und Ausschalten der Anzeige durch Personen ermöglichen. Analoge Anzeigen sind unbewegt oder bewegen sich nur beim Wechsel der statischen Anzeige.

Die Bewegung des Anzeigeinhaltes hinsichtlich Richtung, Geschwindigkeit, Ausmaß und Sichtbarkeit durch die Bewegung des Betrachters ist bei visuellen Anzeigen im Stand der Technik nicht bekannt.

Eine Einflussnahme auf die Bewegung oder Sichtbarkeit der Anzeigeinhalte durch den Betrachter selbst würde die Aufmerksamkeit für visuelle Anzeigen erhöhen. Nicht nur Werbebotschaften würden von einer höheren Wahrnehmungswahrscheinlichkeit profitieren.

Sichere visuelle Anzeigen, die das ungebetene Mitlesen von Anzeigeinhalten verhindern, sind bekannt. So gibt es, um ein Beispiel zu nennen, optische Folien, die der Benutzer im öffentlichen Raum auf seine kleine mobile Anzeigeanordnung legen kann, was benachbarten Personen den Einblick verwehrt. Diese Technik ist für den mobilen Nutzer sehr einfach, für größere stationäre Anzeigeanordnungen und größere Personengruppen aber weniger geeignet.

Die Patentveröffentlichung DE 10 2006 010 971 A1 offenbart ein Verfahren zur autoparallaktischen und autostereoskopischen Anzeige bildarmer Anzeigeinhalte. Im Stand der Technik ist eine gewisse Bewegung des Anzeigeinhaltes durch die Bewegung des Betrachters bei sogenannten autostereoskopischen Displays bekannt und wird in dieser Anmeldung als Autostereoskopische Anzeige drei bezeichnet. Das Ausmaß der Bewegung des räumlichen Seheindruckes ist bei diesen Displays äußerst begrenzt.

Dieser Mangel ist in der geringen Anzahl der Perspektivansichten der Szene oder des Gegenstandes begründet. Um die Kosten für die Aufnahme der Perspektivansichten und die Erzeugung des Kombinationsbildes in Grenzen zu halten, Auflösung und Helligkeit des wahrgenommenen 3D-Eindruckes durch die optische Filterung der Barriere nicht übermäßig zu reduzieren, ist die Zahl der Ansichten meist kleiner als zehn (DE 10 2007 016 773 A1, DE 10 2007 045 385 B3), oft ist die Zahl der Ansichten auch kleiner als fünf. Diese geringe Ansichtenzahl ist eine aus dem Stand der Technik allgemein bekannte Tatsache, sodass hier auf weitere Zitate verzichtet werden soll.

Neben dem äußerst geringen Ausmaß der Bewegung des 3D-Eindruckes bestehen weitere Mängel:
- Diskontinuität der Bewegung durch sogenannte "Sprungpunkte" (DE 10 2009 013 912 A1, DE 10 2008 062 790 A1, DE 10 2008 024 425 A1),
- störende Moire-Effekte (DE 10 2007 054 011 B4, DE 10 2007 049 238 A1, DE 10 2009 054 706 A1, DE 10 2009 013 912 A1), die bereits den monokularen Seheindruck beeinträchtigen,
- rechtes und linkes Auge sehen im Mittel jeweils Bildinformationen von mehr als einer Ansicht; Ursache dafür ist bei endlicher Größe der transparenten Elemente der Barriere das Kombinationsbild aus mehreren Ansichten; die optische Mischung unterschiedlicher Bildinformationen verschiedener Ansichten führt bereits zu Qualitätsverlusten der monokularen Bilder,
- Anordnungen zur Verbesserung der Helligkeit durch Vergrößerung der transparenten Elemente der Barriere (DE 10 309 194 A1, WO 2004077839 A1) verschärfen diesen Mangel weiter,
- fester Betrachtungsabstand vom 3D-Display, im Stand der Technik deshalb häufig als "optimaler Betrachtungsabstand" bezeichnet (DE 101 45 133 C1, DE 10 2007 045 385 B3, DE 10 2009 054 706 A1); die Betrachter haben nur dann einen optimalen räumlichen Seheindruck mit geringer Bewegung, wenn sie sich im optimalen Betrachtungsabstand befinden,
- in der Praxis ist deshalb je nach Anwendungsentfernung der Barriereabstand und/oder die optische Struktur zu verändern; Letzteres erfordert eine neue Barriere, der theoretische Hintergrund dafür ist dem Fachmann spätestens seit 1952 aus dem Artikel von Sam H. Kaplan: "Theory of parallax barriers", Journal of SMPTE Vol. 59, No 7, pp 11-21, July 1952 bekannt.

Es soll deswegen nur das für das weitere Verständnis der Erfindung Notwendige zur Autostereoskopie der Autostereoskopischen Anzeige drei erläutert werden.

Danach sind für eine erfolgreiche Autostereoskopie gleichzeitig zwei optogeometrische Bedingungen zu erfüllen, welche ihren Niederschlag in den Gleichungen (1) oder (4) und (2) des Artikels von Sam H. Kaplan gefunden haben: D = K*I*C/(O + K*I) und B' = ((C - D)/C)*I. Darin bedeuten: D den Abstand des optischen Elements von der Anzeigevorrichtung, K einen Multiplikator, bei Sam H. Kaplan ganzzahlig, C den Abstand der Augen von der Anzeigevorrichtung, im Folgenden bei der Autostereoskopischen Anzeige drei mit OA als optimaler Betrachtungsabstand bezeichnet, O den Abstand zwischen den Augen, im Folgenden als Pupillendistanz Pd bezeichnet und im Mittel als Pd = 65mm verwendet, I den sogenannten Pixel- oder Subpixelpitch der Anzeigevorrichtung in horizontaler und/oder vertikaler Richtung, im Folgenden mit PP bezeichnet, B' den Abstand horizontal und/oder vertikal benachbarter optischer Strukturen des optischen Elements.

Daraus entstehen weitere Nachteile der 3D-Displays. Der Abstand D kann nicht frei gewählt werden. Abstandsänderungen erzwingen bei unverändertem OA stets eine neue Barriere. Wenn kleine OA beispielsweise bei handgehaltenen Kleindisplays verlangt werden, können diese oftmals aus technischen Gründen nicht realisiert werden, weil der Displayrahmen dafür zu dick ist.

In der Patentschrift DE 101 45 133 C1 wird eine Softwarelösung in Aussicht gestellt. Bei diesem Zugang wird außer Acht gelassen, dass die schlechte Kanaltrennung autostereoskopischer 3D-Displays durch die patentierte Bildmischung, sogar innerhalb jedes Pixels, sich zusätzlich verschlechtert. Diese Softwarelösung führt zu dramatischen Qualitätseinbußen.

Die Patentschrift DE 10 2007 045 385 B3 befasst sich mit einem Verfahren zur Verkürzung oder Verlängerung des optimalen Betrachtungsabstandes.

Die prinzipiell schlechte stereoskopische Kanaltrennung ist Ursache für geringe Farb- und Helligkeitskontraste, geringe Bildschärfe und geringe räumliche Tiefe des sogenannten autostereoskopischen Out- und/oder Inscreenings des räumlichen Seheindruckes.

Ursache dafür ist auch hier das Kombinationsbild aus mehr als zwei unterschiedlichen Ansichten. Die in der Patentschrift DE 10 2007 045 385 B3 in Anspruch [1] zu findende Formulierung die optische Kanaltrennung betreffend, ,,..., wodurch beide Augen jeweils ausschließlich oder überwiegend unterschiedliche Ansichten A(k) wahrnehmen und damit ein räumlicher Seheindruck entsteht,...", betont das Ausschließliche trotz der im Mittel tatsächlichen Seltenheit. Die binokulare Fusion von überwiegend mehr als zwei Ansichten ist ein wesentlicher Nachteil autostereoskopischer 3D-Displays mit mehr als zwei Perspektivansichten.

Autostereoskopische Displays mit einem Linsenrasterschirm anstelle des Barriereschirmes verlangen einen festen Abstand D, weil die Zylinderlinsen des Linsenrasterschirmes abbildungsoptisch an das Display angepasst sein müssen, damit der vom Linsenrasterschirm erwartete Helligkeitsgewinn des 3D-Eindruckes im Vergleich mit dem Barriereschirm tatsächlich eintritt. Änderungen des Linsenrasterabstandes vom Display haben nicht nur Helligkeitsverluste zur Folge, sondern auch Einschränkungen in der Anzahl der Betrachter und der orthoskopischen Sehzonen. Eine Änderung des optimalen Betrachtungsabstandes ist nicht möglich.

Ursache ist der Verlust an optischer Vergrößerung der Zylinderlinsen bei Fehlanpassung. Die in der DE 10 2009 054 706 A1 beschriebene alternative Anordnung eines auf der CeBIT 2010 als Chromatic Light Deflector bezeichneten Linsenrasterschirms mit nichtsphärischen konvex-konkaven optischen Strukturen und autostereoskopisch nicht als Barriere wirkender transparent-opaker Beschichtung der Rückseite löst diese Probleme nicht und leidet stattdessen an einem vergleichsweise geringen Helligkeitsgewinn.

In dieser Anordnung wird wie bei allen autostereoskopischen Displays mit Linsenraster die optische Abbildung der Bildwiedergabefläche der Bildwiedergabeeinheit durch das Linsenraster in den Betrachtungsraum bezweckt. Zum anderen sind Helligkeitsgewinn und maximaler Schrägsichtwinkel mit der wellenartigen konvex-konkaven optischen Struktur des Chromatoc-Light-Deflector-Schirmes kleiner als bei einem Linsenrasterschirm mit plankonvexen Zylinderlinsen.

Entscheidend für Helligkeitsgewinn und Schrägsichtwinkel ist die vom Betrachter wahrnehmbare optische Lupenvergrößerung durch das Linsenraster, die nahe ± unendlich liegen soll. Inwieweit die optisch undefinierte optische Struktur in der Anordnung nach DE 10 2009 054 706 A1 zu vergrößernder optischer Abbildung in der Lage ist, wird in der Schrift nicht angegeben.

Digitale Anzeigen, sogenannte digital signages mit für den Fern- und Nahbereich geeigneten Anzeigeinhalten sind in vielen Ausführungsvarianten bekannt. Beispielsweise werden für den Fern- und Nahbereich gleichzeitig zwei Anzeigeanordnungen benutzt oder es werden zwei Anzeigen auf einer Anzeigeanordnung dargeboten. Ein Beispiel dafür ist die HYBRID Digital Signage der japanischen Firma TOWA MECCS CORPORAION vom Typ BRIDII DS-WL415S, mit der das Prinzip "2 in 1" mit einem LC-Display und einer LED-Anzeige realisiert wird. In anderen Varianten werden beide Anzeigeinhalte auf ein und derselben Anzeige nacheinander auf einer Anzeigeanordnung sichtbar gemacht.

Dabei unterscheiden sich diese digitalen Anzeigen von anderen visuellen Anzeigen grundsätzlich nicht, häufig nur in der Darstellungsgröße der Anzeigeinhalte für den Fern- und Nahbereich. Derartige Doppel- oder Wechselanzeigen finden inmitten der urbanen Werbewelt kaum die gewünschte Beachtung. Der Nutzen für den Betreiber ist oft unbefriedigend.

Der Erfindung liegt die Aufgabe zugrunde, für analoge oder digitale Anzeigevorrichtungen eine hilfsmittelfreie Möglichkeit zu schaffen, bei welcher mehrere Betrachter durch ihre Eigenbewegung unbewegte bildarme Anzeigeinhalte jeweils bewegen, mindestens eine zu bewegten Anzeigeinhalten zusätzliche Bewegung jeweils erzeugen, durch ihre Eigenbewegung sichtbare Anzeigeinhalte jeweils unsichtbar machen und umgekehrt, verschwundene Anzeigeinhalte durch ihre Eigenbewegung jeweils wieder erscheinen lassen, den Bewegungsbereich der durch Eigenbewegung eines Betrachters erzeugten Bewegung des Anzeigeinhaltes im Vergleich zum Bewegungsbereich autostereoskopischer 3D-Displays der Autostereoskopie des Standes der Technik zu vergrößern und weitere Mängel bei der Bewegung der Anzeigeinhalte durch die Eigenbewegung des Betrachters autostereoskopischer 3D-Displays zu beseitigen. Ferner soll im gleichen Bereich der Betrachtungsabstände eine autoparallaktisch-autostereoskopische oder nur eine autostereoskopische Anzeige desselben Anzeigeinhaltes wahrnehmbar sein, wobei diese autostereoskopische Anzeige nicht auf der Theorie der Autostereoskopie des Standes der Technik im Artikel von Sam H. Kaplan: "Theory of parallax barriers", Journal of SMPTE Vol. 59, No 7, pp 11-21, July 1952 beruht und bei mehreren Personengruppen ausschließlich einer Personengruppe selektiv die Wahrnehmbarkeit der Anzeigeinhalte zu ermöglichen. Der Erfindung liegt die weitere Aufgabe zugrunde, für digitale Anzeigeanordnungen des Fern- und Nahbereichs eine Möglichkeit zu schaffen, durch welche die Attraktivität und Exklusivität des Anzeigeinhaltes und seines Standortes weiter erhöht werden können, sowohl autoparallaktisch-autostereoskopische Anzeigeinhalte als auch autostereoskopische Anzeigeinhalte der Autostereoskopie des Standes der Technik auf ein und derselben Anzeigeanordnung in Gestalt einer digitalen Wechselanzeige wahrnehmbar zu machen.

Erfindungsgemäß wird die Aufgabe mit einem Verfahren zur autoparallaktischen und autostereoskopischen Anzeige entsprechend Anspruch 1 oder 9 durchgeführt, wobei die Anzeige mit einer analogen oder digitalen Anzeigevorrichtung, bei welcher in einem virtuellen oder realen Raster aus virtuellen oder realen Zeilen k und virtuellen oder realen Spalten 1 auf Anzeigeelementen A(k, 1) Objektinformationen unterschiedlicher Perspektivansichten einer Szene oder eines Gegenstandes sichtbar gemacht werden, die analoge Anzeigevorrichtung ein plattenförmiges Substrat mit Bereichen unterschiedlicher optischer Transparenz ist, die digitale Anzeigevorrichtung ein LCD, ein OLED-Display oder ein Plasmabildschirm ist und dem Raster aus Zeilen und Spalten mit Anzeigeelementen A(k, 1) im Abstand D mindestens ein optisches Element mit periodisch angeordneten optischen Strukturen vor- oder nachgeordnet wird, durch welches für das von den Anzeigeelementen A(k, 1) transmittierte oder ausgestrahlte Licht Ausbreitungsrichtungen vorgegeben werden, die durchschnittliche horizontale und/oder vertikale kleinste Periodenlänge der optischen Strukturen auf dem mindestens einen optischen Element ein ganzzahliges Vielfaches der durchschnittlichen horizontalen und/oder vertikalen Abmessung eines Anzeigeelementes A(k, 1) oder ein ganzzahliges Vielfaches des durchschnittlichen horizontalen und/oder vertikalen Abstandes benachbarter Anzeigeelemente A(k, 1), multipliziert mit einem Korrekturfaktor (C - D)/C, ist, wobei C der definierte optimale autostereoskopische Betrachtungsabstand der Augen des stereoskopischen Betrachters von dem Raster aus Zeilen k und Spalten 1 der Anzeigevorrichtung ist, sodass Betrachter, die sich im sogenannten optimalen Betrachtungsabstand A = C befinden, beim hilfsmittelfreien binokularen Blick auf die Anzeigevorrichtung auf Grund der optischen Wechselwirkung zwischen dem optischen Element und der Anzeigevorrichtung eine autostereoskopische Wahrnehmung des bildhaften Anzeigeinhaltes der Szene oder des Gegenstandes haben, welche sich bei horizontaler und/oder vertikaler Bewegung des Betrachters in entgegengesetzter oder in gleicher Richtung zur Eigenbewegung des Betrachters bewegt, wobei der horizontale und/oder vertikale Bereich dieser Bewegungen und/oder Bewegung begrenzt und diskontinuierlich ist, dadurch gelöst, dass auf der analogen oder digitalen Anzeigevorrichtung, bei welcher in einem virtuellen oder realen Raster aus virtuellen oder realen Zeilen k und virtuellen oder realen Spalten 1 auf Anzeigeelementen A(k, 1) Objektinformationen so sichtbar gemacht werden, dass die Gleichung AZ = OZ*DZ erfüllt wird, wobei AZ die Ansichtenzahl, OZ eine Objektzahl, DZ eine Dynamikzahl bedeuten, dass die analoge Anzeigevorrichtung ein plattenförmiges Substrat mit Bereichen unterschiedlicher optischer Transparenz, dass die digitale Anzeigevorrichtung ein LCD, ein OLED-Display, ein Plasmabildschirm oder eine höchstauflösende LED-Wand, bei der vorzugsweise die Abstände benachbarter LEDs kleiner ein Millimeter sind, ist, dass OZ in einem weiten Bereich OZ > 4 bis OZ > 800 liegen kann, weshalb OZ vorzugsweise gemäß der Gleichung OZ = OZmax*RF = (O - 1)*RF berechnet wird, wobei O = ((C*(A - D))/(D*(A - C))) und RF ein Reduktionsfaktor ist, 0 < RF ≤ 1,0, der vorzugsweise gemäß der Gleichung RF = (1/SZ)*(EZ + (Pd/((O - 1)*PP)*(C/(A - C)))) berechnet werden kann, wobei SZ eine ganzzahlige Systemzahl ist, SZ > 1, durch welche auf der Anzeigevorrichtung horizontale und/oder vertikale Strecken SZ*PP definiert werden, welche dem horizontalen und/oder vertikalen kleinsten Abstand der Objekte auf der Anzeigevorrichtung entsprechen, EZ eine ganzzahlige Elementzahl ist, 1 ≤ EZ ≤ SZ, welche die horizontale und/oder vertikale Anzahl der Anzeigeelemente A(k, 1) ist, die für jeweils gleiche Objekte auf der Anzeigevorrichtung zur Darstellung des erfindungsgemäßen Anzeigeinhaltes verwendet werden, das Produkt (OZ/RF)*SZ so gewählt wird, dass (OZ/RF)*SZ nach Rundung eine ganze Zahl > 1 ist und Pd die Pupillendistanz beim Menschen bedeutet, im Mittel Pd = 65mm, dass DZ in einem weiten Bereich DZ > 1 bis DZ > 150 liegen kann, weshalb DZ vorzugsweise gemäß der Gleichung DZ = (O/SZ)*(1 + VZ) berechnet wird, wobei VZ eine Verhältniszahl ist, VZ > 0, und VZ so gewählt wird, dass DZ > 1,0 im Fernbetrachtungsabstand FA gilt, wobei FA der größte Betrachtungsabstand A im Bereich der Betrachtungsabstände A ist, von dem aus der Anzeigeinhalt der erfindungsgemäßen Anzeige unter einem Sehwinkel ≥ 15 Winkelminuten erscheint, dass die projizierte horizontale Breite SB der vertikalen transparenten Streifen des optischen Elements in der Ausführung als Barriereschirm die Gleichung SB = VZ*PP erfüllt, wobei das Projektionszentrum im Fernbetrachtungsabstand FA liegt und die Projektion auf die Anzeigevorrichtung erfolgt, dass das Produkt (OZ/RF)*ZZ*SZ*PP so bestimmt wird, dass es durch die nutzbare horizontale Breite der analogen oder digitalen Anzeigevorrichtung eine obere Schranke hat, wobei ZZ eine nicht notwendig ganzzahlige Zonenzahl ist, mit ZZ ≥ 1, im Fall ZZ ≤ 2 das Produkt (OZ/RF)*SZ bei dem Betrachtungsabstand A = NA berechnet wird, wobei NA der Nahbetrachtungsabstand gemäß der Definition NA ≥ 5*C des durch den Fernbetrachtungsabstand FA und den Nahbetrachtungsabstand NA begrenzten Bereichs der Betrachtungsabstände A ist, und im Fall ZZ > 2 das Produkt (OZ/RF)*SZ je nach gewünschtem Betrachtungsabstand A im Bereich FA bis NA berechnet und bei digitalen Anzeigevorrichtung softwareseitig umgeschaltet werden kann, dass für die maximale horizontale Auflösung Ah der Anzeigevorrichtung die Gleichung Ah = BH/((OZ/RF)*PP = ZZ*SZ gilt, mit BH = B oder BH = H, wobei B und H die nutzbare Breite und Höhe der Anzeigevorrichtung im Quer- oder Hochformat sind, dass Änderungen der Zonenzahl ZZ und/oder der Systemzahl SZ auf der Anzeigevorrichtung bei unverändertem optischen Element hinsichtlich seiner optogeometrischen Struktur, also hinsichtlich seines Korrekturfaktors (C - D)/C und seiner projizierten Streifenbreite SB, und seiner Anordnung relativ zur Anzeigevorrichtung hinsichtlich Abstand und azimutaler Orientierung softwareseitig und gemäß der Gleichung ZZ = ZZ' ± zz, zz ≥ 0 und/oder der Gleichung SZ = SZ' ± sz, sz ≥ 0 durchgeführt werden.

Das optische Element ist entsprechend einer weiteren Ausführungsform eine Lens Barrier Optic, wobei der optische Brechungsindex des Mediums mit dem Abstand D zwischen der optisch wirksamen Fläche des optischen Elements und der optisch wirksamen Fläche der Anzeigevorrichtung vorzugsweise 1 ist. Das optische Element kann aber auch ein Barriere-, Zylinderlinsenraster-, Linsenraster-, Chromatic-Light-Deflector-Schirm sein.

Von Vorteil ist es, dass der vollständige Parallaxenzyklus der autoparallaktischen Anzeige gemäß der Gleichung für den Parallaxenwinkel α = arctan(((O - 1)*SZ*PP)/C) eingestellt werden kann.

Ein weiterer Vorteil der Erfindung ist es, dass die Anzeigeelemente A(k, 1) auf dem Raster der Anzeigevorrichtung, welche zum jeweiligen Zeitpunkt und/oder am jeweiligen Ort keine erfindungsgemäßen Anzeigeinhalte anzeigen, jeweils nicht erfindungsgemäße Anzeigeinhalte bewegt oder unbewegt wiedergeben können.

Vorteilhaft ist es ebenso, dass Betrachter im Betrachtungsabstand FA bis NA bei hilfsmittelfreiem, monokularem oder binokularem Blick auf die analoge oder digitale Anzeigeanordnung bei ihrer horizontalen und/oder vertikalen Bewegung aufgrund der optischen Abtastung der Anzeigeelemente A(k, 1) auf dem virtuellen oder realen Raster aus virtuellen oder realen Zeilen k und virtuellen oder realen Spalten 1 der analogen oder digitalen Anzeigevorrichtung durch die transparenten Strukturen des mindestens einen im Abstand D vor- oder nachgeordneten optischen Elements gleichzeitig eine autoparallaktische Bewegung des bildarmen erfindungsgemäßen Anzeigeinhaltes in entgegengesetzter oder gleicher Richtung wahrnehmen, welche sich vom Stand der Technik insbesondere durch Ansichtenzahlen AZ > 20 unterscheidet, wobei die autoparallaktische Anzeige bei monokularem Blick in der Ebene der Anzeigevorrichtung erscheint und Betrachter mit der Fähigkeit zum Binokularsehen und trainierbarer Fähigkeit zur physiologischen Entkopplung von Akkommodation und Konvergenz bei ihrer horizontalen und/oder vertikalen Bewegung gleichzeitig eine autoparallaktisch-autostereoskopische Wahrnehmung desselben bildarmen Anzeigeinhaltes und ohne horizontale und/oder vertikale Bewegung allein die autostereoskopische Wahrnehmung dieses Anzeigeinhaltes haben, wobei die autoparallaktisch-autostereoskopische Wahrnehmung und die autostereoskopische Wahrnehmung im Abstand C von der Anzeigevorrichtung als autostereoskopisches Outscreening oder Inscreening wahrgenommen werden und die autostereoskopische Wahrnehmung nicht auf der Theorie von Sam H. Kaplan im Artikel "Theory of parallax barriers", Journal of SMPTE Vol. 59, No 7, pp 11-21, July 1952 beruht, und wird bei der digitalen Wechselanzeige in der Software für die digitale Anzeigevorrichtung die Systemzahl SZ so gewählt, dass gilt SZ = PA ± sz, sz = 0, SZ > 1 ganzzahlig, wobei PA > 1 die Anzahl der Perspektivansichten bei der Autostereoskopischen Anzeige drei der Autostereoskopie bedeutet, wobei mehrfach vorkommende gleiche Perspektivansichten innerhalb einer Perspektivansichtenperiode auf der digitalen Anzeigevorrichtung mitzuzählen sind, die Zonenzahl ZZ ≥ 1, ZZ reelle Zahl, so gewählt, dass gilt 1 ≤ ZZ ≤ 7, vorzugsweise ZZ = 1, erfüllt der Korrekturfaktor für das optische Element (C - D)/C, D > 0, bei SZ = PA + sz ≥ 0, sz ganzzahlig, die Ungleichung 0,9 ≤ (C - D)/C < 1,0 und hat der Multiplikator K gemäß der Gleichung K = O/(((C/D) - 1)*I) den Wert K ≥ 1, K reelle Zahl 1 ≤ K ≤ 2, vorzugsweise K = 1, resultiert ohne irgendeine Änderung am optischen Element bei der Software-Umschaltung auf der digitalen Anzeigevorrichtung der digitalen Wechselanzeige auf das Kombinationsbild mit einer Zahl der Perspektivansichten PA der Szene oder des Gegenstandes für Betrachter mit der Fähigkeit zum Binokularsehen und trainierbarer Fähigkeit zur physiologischen Entkoppelung von Akkommodation und Konvergenz die Autostereoskopische Anzeige drei der Autostereoskopie mit einem optimalen Betrachtungsabstand OA = C > 0.

Das erfindungsgemäße Verfahren soll nachstehend anhand von Zeichnungen näher erläutert werden. Die Zeichnungen zeigen die dynamische Ansichtenanzeige von Anzeigeelementen A(k, 1) auf der Anzeigevorrichtung ausschnittsweise und schematisch in
Fig. 1 mit einer Objektzahl OZ = 24 bei einem Reduktionsfaktor RF2 = 1,0, einer Dynamikzahl DZ = 8, einer Zonenzahl ZZ = 1 und einer Ansichtenzahl AZ = 192,
Fig. lades Objekts mit der horizontalen Position 10 in Zeile 10 aus Fig. 1 in starker Vergrößerung,
Fig. 2 mit einer Objektzahl OZ = 12 bei einem Reduktionsfaktor RF1 = 0,50, einer Dynamikzahl DZ = 6, einer Zonenzahl ZZ = 1 und einer Ansichtenzahl AZ = 72,
Fig. 3 mit einer Objektzahl OZ = 6 bei einem Reduktionsfaktor RF1 = 0,50, einer Dynamikzahl DZ = 6, einer Zonenzahl ZZ = 2 und einer Ansichtenzahl AZ = 36 und
Fig. 4 mit einer Objektzahl OZ = 12 bei einem Reduktionsfaktor RF2 = 1,0 einer Dynamikzahl DZ = 6, einer Zonenzahl ZZ = 2 und einer Ansichtenzahl AZ = 72.

In den Figuren ist die Nummer der jeweils angezeigten Ansicht des jeweiligen Anzeigeelements A(k, 1), bei digitalen Anzeigevorrichtungen häufig als Pixel bezeichnet, eingetragen. Dabei sind die Ansichtennummern eingeschalteter Pixel fett und die ausgeschalteter Pixel nicht fett und kursiv dargestellt.

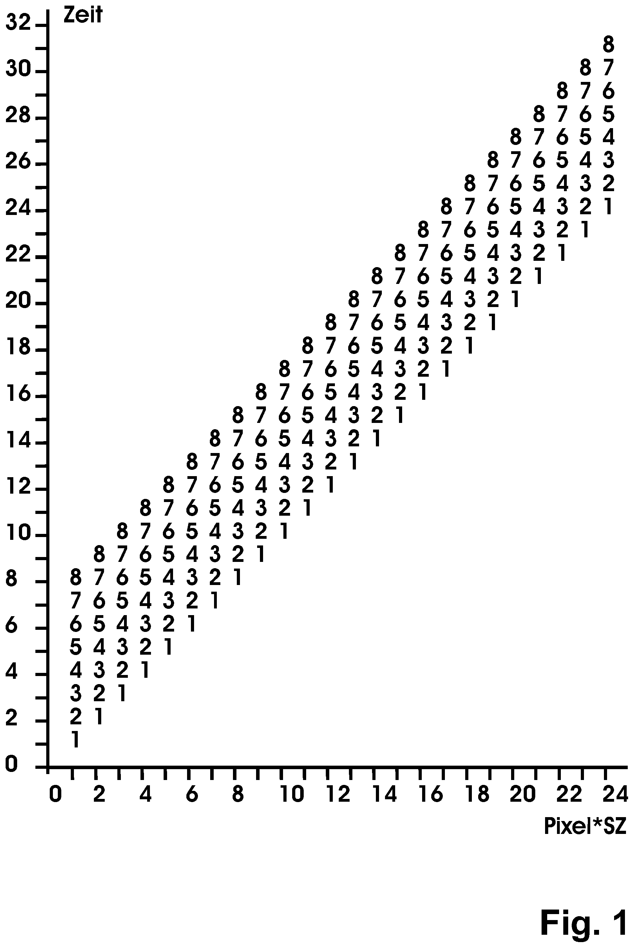

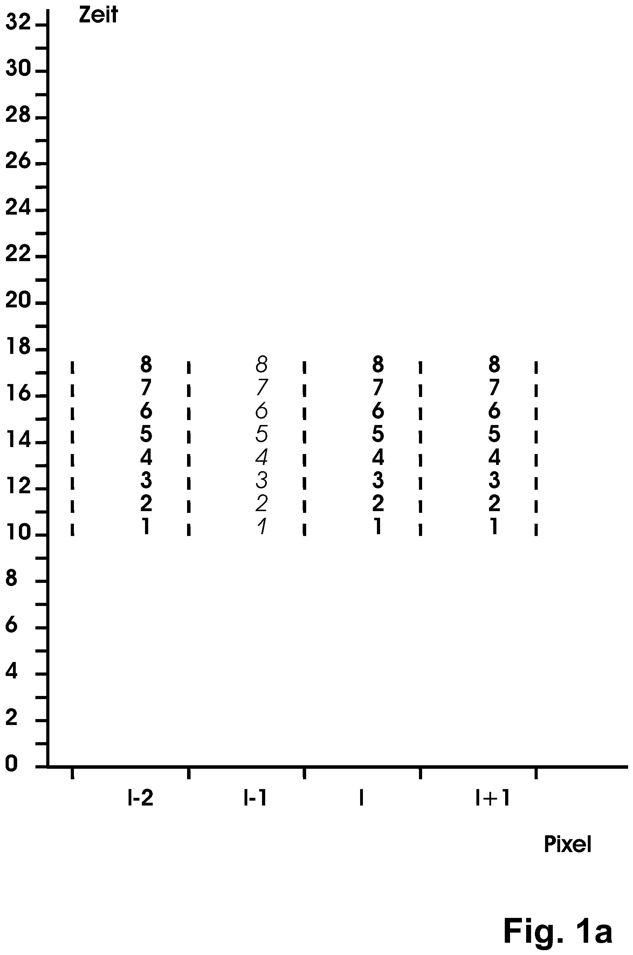

In Fig. 1 ist hinter dem Barriereschirm auf einer Zeile k der analogen oder digitalen Anzeigevorrichtung zum Zeitpunkt 1 von allen Objekten nur das Objekt 1 und nur mit dem Pixel 1 sichtbar. Bis zum Zeitpunkt 2 sind vom Objekt 1 die Pixel 1 und 2 sowie vom Objekt 2 das Pixel 1 sichtbar. Bis zum Zeitpunkt 3 sind vom Objekt 1 die Pixel 1, 2 und 3, vom Objekt 2 die Pixel 1 und 2 sowie vom Objekt 3 das Pixel 1 sichtbar. Bis zum Zeitpunkt 8 sind vom Objekt 1 die Pixel 1, 2, 3, ... und 8, vom Objekt 2 die Pixel 1, 2, 3, ... und 7, vom Objekt 3 die Pixel 1, 2, 3, ... und 6, ... sowie vom Objekt 8 das Pixel 1 sichtbar. Bis zum Zeitpunkt 8 sind von den 24 Objekten nur die Objekte 1 bis 8 sichtbar oder teilweise sichtbar. Zum Zeitpunkt 24 sind die Objekte 1 bis 16 unsichtbar, vom Objekt 17 ist das Pixel 8, vom Objekt 18 das Pixel 7, vom Objekt 19 das Pixel 6, ..., vom Objekt 24 das Pixel 1 sichtbar. Im Zeitraum 24 bis 32 sind vom Objekt 16 das Pixel 8, vom Objekt 17 die Pixel 7 und 8, vom Objekt 18 die Pixel 6, 7 und 8, ..., vom Objekt 24 die Pixel 1, 2, 3, ... und 8 sichtbar. Zum Zeitpunkt 32 ist von allen 24 Objekten nur das Objekt 24 und nur mit dem Pixel 8 sichtbar.

Bei den Zeichnungen handelt es sich in horizontaler Richtung stets um die Ansichtenanzeige in ein und derselben Zeile k des Rasters aus Anzeigeelementen A(k,l) der Anzeigevorrichtung. Zum selben Zeitpunkt kann die Ansichtenanzeige der Pixel in anderen Zeilen, vorzugsweise benachbarten Zeilen, identisch sein.

In Fig. 1a ist eine beispielhafte dynamische Ansichtenanzeige der Anzeigeelemente A(k, 1) des Objekts mit der horizontalen Position 10 in Zeile 10 aus Fig. 1 dargestellt. Zu diesem Zeitpunkt zeigt das Objekt in Fig. 1 die dynamische Ansicht 1. Es besteht horizontal beispielsweise aus vier benachbarten Anzeigeelementen A(k, 1) und die Elementzahl ist EZ = 4. Beispielhaft ist auf der Anzeigevorrichtung in einer Zeile k der Fig. 1a zum Zeitpunkt 10 folgender Aktivierungsstatus der Pixel realisiert: Die Pixel in den Spalten 1-2, 1 und 1+1 sind eingeschaltet und das Pixel in der Spalte 1-1 ist ausgeschaltet und in den Spalten 1-2, 1 und 1+1 wird die dynamische Ansicht 1 fett angezeigt. Das Ein- und Ausschalten der Pixel folgt dem jeweils darzustellenden Anzeigeinhalt. Zu den nachfolgenden Zeitpunkten 11, 12, 13, ... 17 zeigen die Pixel der Zeile k in den Spalten 1-2, 1 und 1+1 der Fig. la gemäß der Dynamikzahl DZ = 8 nacheinander die dynamischen Ansichten 2, 3, 4, ... 8 an. In Spalte 1-1 bleibt das Pixel auch zu den Zeitpunkten 2, 3, 4, ... 8 ausgeschaltet. Zum selben Zeitpunkt 10 können der Aktivierungsstatus und/oder die Ansichtenanzeige der Pixel in anderen Zeilen k, vorzugsweise benachbarten Zeilen, identisch sein. Andere Aktivierungszustände in anderen Zeilen k sind denkbar, ebenso andere Elementzahlen EZ. Anzeigeelemente A(k, 1) von Objekten mit anderen horizontalen Positionen als der Position 10 in Zeile 10 aus Fig. 1, insbesondere benachbarte, insbesondere die Anzeigeelemente, die zu der Objektzahl OZ gehören, sind identisch. In allen Zeilen k, die zu ein und demselben Objekt gehören, ist die Elementzahl EZ gleich.

Der Ansichtenanzeige in Fig. 1 und Fig. la liegt der Reduktionsfaktor RF2 = 1,0 zugrunde. Betrachter sehen auf der autoparallaktisch-autostereoskopischen Anzeige bei ihrer Seitwärtsbewegung eine entgegengerichtete, im Weiteren als Autoparallaktisch-Autostereoskopische Anzeige eins bezeichnete, oder gleichgerichtete, im Weiteren als Autoparallaktisch-Autostereoskopische Anzeige zwei bezeichnete, und kontinuierliche Bewegung des Anzeigeinhaltes mit stetigem Übergang von kompletter Sichtbarkeit des Anzeigeinhaltes zu kompletter aber komplementärer Anzeige bis zu vollständigem Wiedererscheinen, wobei sich dieser Parallaxenzyklus bei weiterer Seitwärtsbewegung beliebig oft wiederholen kann. Das Gesagte trifft uneingeschränkt zu für autoparallaktische Anzeigen mit der Zonenzahl ZZ = 1 wie in Fig. 1.

Die Anzeigeelemente A(k, 1), die auf der Anzeigevorrichtung nicht oder zum jeweiligen Zeitpunkt nicht der Anzeige erfindungsgemäßer Anzeigeinhalte dienen, können örtlich und/oder zeitlich eingeschaltet oder ausgeschaltet sein. Dabei kann es sich um komplexe statische oder dynamische bildhafte Informationen handeln. Gleichfalls können einfache Muster, Schrift, Buchstaben, Ziffern oder einfarbige homogene Flächen gestaltet werden. Keinesfalls ausgeschlossen ist das "informationsfreie" Schwarz. Erfindungsgemäß können diese Flächen so gestaltet werden, dass sie als Referenz für die autoparallaktisch-autostereoskopische Anzeige dienen, diese hinsichtlich Helligkeit, Farbe und Bewegung zweckmäßig kontrastieren und in ihrer geometrischen Struktur und Größe an die Sichtverhältnisse der Anzeige angepasst werden.

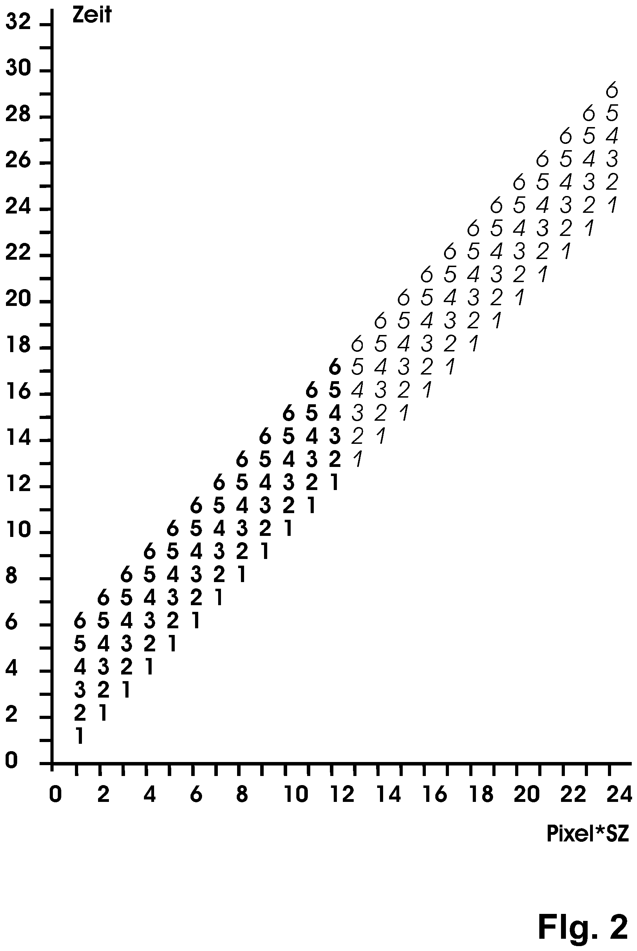

In Fig. 2 mit DZ = 6 dynamischen Ansichten pro Pixel, mit OZ = 12 Objekten bei einem Reduktionsfaktor RF1 = 0,5 beträgt die gesamte Ansichtenzahl AZ = 72 Ansichten. Betrachter sehen bei ihrer Seitwärtsbewegung die Anzeigen wie bei Fig. 1 beschrieben, jedoch mit einem stetigen Übergang von kompletter Sichtbarkeit des Anzeigeinhaltes zu totalem Verschwinden bis zu vollständigem Wiedererscheinen, wobei sich dieser Übergang bei weiterer Seitwärtsbewegung beliebig oft wiederholen kann.

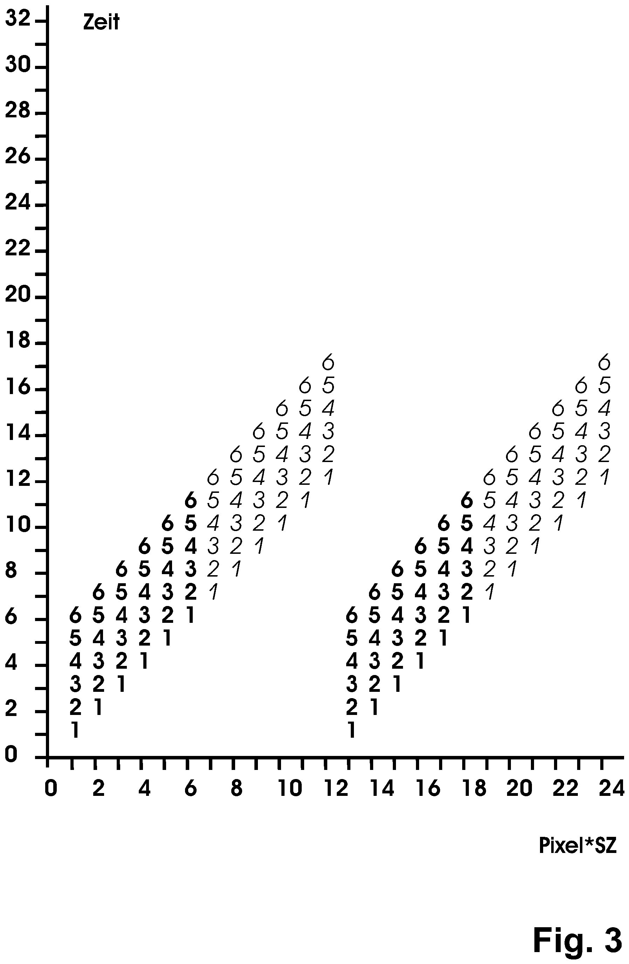

In Fig. 3 mit DZ = 6 dynamischen Ansichten pro Pixel, mit OZ = 6 Objekten bei einem Reduktionsfaktor RF1 = 0,5, beträgt die gesamte Ansichtenzahl AZ = 36 Ansichten. Die Zonenzahl ZZ = 2. Betrachter sehen bei ihrer Seitwärtsbewegung die Anzeigen wie bei Fig. 2 beschrieben gleichzeitig in zwei Zonen, wobei sich die Übergänge bei weiterer Seitwärtsbewegung beliebig oft wiederholen können. Die Anzeigeinhalte in beiden Zonen können zur selben Zeit verschieden sein.

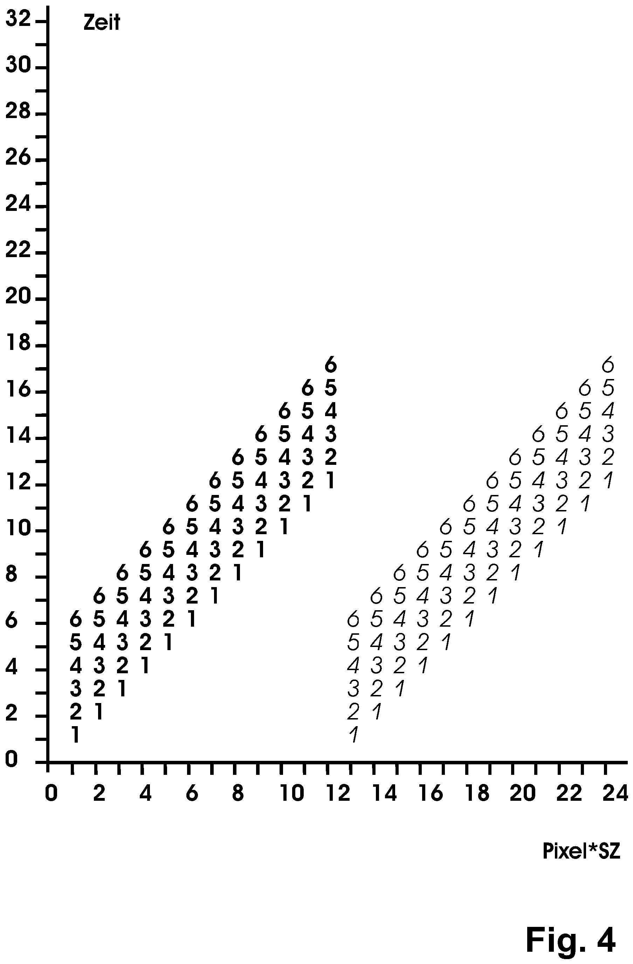

In Fig. 4. mit DZ = 6 dynamischen Ansichten pro Pixel, mit OZ = 12 Objekten bei einem Reduktionsfaktor RF2 = 1,0, beträgt die gesamte Ansichtenzahl AZ = 72 Ansichten. Die Zonenzahl ZZ = 2. Betrachter sehen bei ihrer Seitwärtsbewegung die Anzeigen wie bei Fig. 1 beschrieben in einer der beiden Zonen, in Fig. 4 in der linken Zone, wobei sich der Übergang bei weiterer Seitwärtsbewegung beliebig oft wiederholen kann.

Die in Fig. 1a erläuterte beispielhafte dynamische Ansichtenanzeige der Anzeigeelemente A(k, 1) eines Objekts mit der horizontalen Position 10 in Zeile 10 aus Fig. 1 und die weiteren Erläuterungen zu Fig. 1a gelten sinngemäß auch als Erläuterungen zu Fig. 2, Fig. 3 und Fig. 4.

Es ist anzumerken, dass bei der in den Figuren 1 bis 4 beschriebenen, zur Eigenbewegung des Betrachters entgegen- oder gleichgerichteten Bewegung der Anzeigeinhalte und in der weiteren Beschreibung des Verfahrens die Anordnung des optischen Elements in Betrachtungsrichtung vor der Anzeigevorrichtung zugrunde liegt, eine Anordnung in Betrachtungsrichtung hinter der Anzeigevorrichtung jedoch ebenfalls zum Schutzumfang des Verfahrens gehört.

Die oben eingeführten Bezeichnungen Autoparallaktisch-Autostereoskopische Anzeige eins und zwei besagen, dass bei Eigenbewegung des Betrachters gleichzeitig mit der autoparallaktischen Anzeige, im Weiteren Autoparallaktische Anzeige eins oder zwei genannt, eine autostereoskopische Anzeige, im Weiteren Autostereoskopische Anzeige eins oder zwei genannt, desselben Anzeigeinhaltes wahrgenommen werden kann, welche nicht auf der Theorie zur Autostereoskopie nach dem Artikel von Sam H. Kaplan beruht. Dabei erscheint die autostereoskopische Anzeige bei gegengerichteter autoparallaktischer Bewegung in Betrachtungsrichtung vor der Anzeigevorrichtung als sogenanntes autostereoskopisches Outscreening und bei gleichgerichteter autoparallaktischer Bewegung in Betrachtungsrichtung hinter der Anzeigevorrichtung als sogenanntes autostereoskopisches Inscreening.

Beim Binokularsehen und bei trainierbarer Fähigkeit zur physiologischen Entkopplung von Akkommodation und Konvergenz verbleibt jedem Betrachter ohne Eigenbewegung die autostereoskopische Anzeige. Bei fehlender Fähigkeit zum Binokularsehen oder beim Monokularsehen verbleibt den Betrachtern die autoparallaktische Anzeige.

Durch die zusätzliche autostereoskopische Anzeige können Attraktivität und Exklusivität der analogen oder digitalen Anzeigen und deren Standorte verbessert werden.

Die weiter unten erläuterten Ausführungsbeispiele A und F und weiteren 10 Beispiele A-E und G-L belegen die große Zahl von Ansichten der erfindungsgemäßen Anzeigen und in der Folge ihre kontinuierliche und sprungpunktfreie Bewegung. Die Beispiele belegen die Anwendungsbreite sowie weitere Vorteile der Erfindung hinsichtlich der Darstellungsgröße, der Ausmaße des Betrachtungsraumes bei ein und demselben optischen Element anstelle einer einzigen "optimalen" Betrachtungsebene, die freie Wahl des Abstandes D zwischen optischem Element und Anzeigevorrichtung, insbesondere in der Ausführung als Lens Barrier Optic, die Vorzüge der Lens Barrier Optic gegenüber einem Chromatic-Light-Deflector-Schirm selbst dann, wenn die Lens Barrier Optic die Chromatic-Light-Deflector-Technologie für das konvex-konkave Linsenraster verwendet, den softwareseitigen Wechsel zwischen den Autoparallaktisch-Autostereoskopischen Anzeigen eins und zwei, die darstellbaren bildarmen Anzeigeinhalte ohne störende Moire-Effekte. Der bei autostereoskopischen 3D-Displays der Autostereoskopischen Anzeige drei notwendigerweise eingeführte Qualitätsbegriff "Stereokanaltrennung" erübrigt sich bei den erfindungsgemäßen Autostereoskopischen Anzeigen eins und zwei, da die Stereokanaltrennung verfahrensbedingt 100% beträgt.

Zur Erläuterung der beispielhaften Anordnungen zur Durchführung des Verfahrens dienen die Zeichnungen Fig. 1 bis Fig. 4. Diese zeigen ausschnittsweise und schematisch die analoge oder digitale Anzeigevorrichtung mit Objekten, die aus lichttransmittierenden oder lichtausstrahlenden Anzeigeelementen A(k, 1) in einem Raster aus Zeilen k und Spalten 1 bestehen, welche bei jedem Objekt zum selben Zeitpunkt unterschiedliche dynamische Ansichten mit steigender oder fallender Ansichtennummer anzeigen.

Der analogen oder digitalen Anzeigevorrichtung ist im Abstand D in Betrachtungsrichtung eines Betrachters ein optisches Element mit periodisch angeordneten optischen Strukturen vor- oder nachgeordnet, welches aufgrund seiner optischen Abtastung dynamische Ansichten der Anzeigeelemente A(k, 1) auf der Anzeigevorrichtung anzeigt. Das optische Element ist vorzugsweise eine Lens Barrier Optic. Diese besteht aus einem plankonvexen Zylinderlinsenrasterschirm und einem Barriereschirm auf dessen planer Rückfläche, wobei das Linsenraster abbildungsoptisch und geometrisch an die transparenten Streifen der Barriere angepasst ist. Erfindungsgemäß kann der genannte Linsenrasterschirm unter Beibehaltung der Anpassungsbedingungen durch die konvex-konkave optische Struktur eines Chromatic-Light-Deflector-Schirmes ersetzt werden.

Wird ohne irgendeine Änderung am optischen Element hinsichtlich optogeometrischer Struktur, Abstand D und azimutaler Orientierung bei der digitalen Wechselanzeige in der Software für die digitale Anzeigevorrichtung die Systemzahl SZ so gewählt, dass gilt SZ = PA + sz, sz ≥ 0, sz ganzzahlig oder SZ = PA - sz, sz ≥ 1, SZ und sz ganzzahlig, SZ > 0, wobei PA die Anzahl der Perspektivansichten bei der Autostereoskopischen Anzeige drei der Autostereoskopie bedeutet, wobei mehrfach vorkommende gleiche Perspektivansichten innerhalb einer Perspektivansichtenperiode auf der digitalen Anzeigevorrichtung mitzuzählen sind, die Zonenzahl ZZ ≥ 1, ZZ reelle Zahl, so gewählt, dass gilt 1 ≤ ZZ ≤ 7, vorzugsweise ZZ = 1, erfüllt der Korrekturfaktor für das optische Element (C - D)/C, D > 0, bei SZ = PA + sz ≥ 0, sz ganzzahlig, die Ungleichung 0,9 ≤ (C - D)/C < 1,0 und hat der Multiplikator K den Wert K ≥ 1, K reelle Zahl, und wird auf der Anzeigevorrichtung der erfindungsgemäße Anzeigeinhalt angezeigt, resultiert die Autoparallaktisch-Autostereoskopische Anzeige eins oder zwei in einem Bereich der Betrachtungsabstände A, der durch den Fernbetrachtungsabstand FA und den Nahbetrachtungsabstand NA begrenzt wird, wobei die erfindungsgemäße Anzeige bei Eigenbewegung jedes Betrachters eine entgegengerichtete oder gleichgerichtete autoparallaktische Bewegung aufweist, Autoparallaktische Anzeige eins oder zwei, und gleichzeitig oder ohne Eigenbewegung eine autostereoskopische Anzeige desselben Anzeigeinhaltes für Betrachter mit der Fähigkeit zum Binokularsehen und trainierbarer Fähigkeit zur physiologischen Entkoppelung von Akkommodation und Konvergenz im selben Bereich der Betrachtungsabstände A wahrnehmbar wird, wobei die autostereoskopische Wahrnehmung im Abstand C > 0 als sogenanntes autostereoskopisches Outsreening OS vor der Anzeigevorrichtung oder im Abstand C < 0 als sogenanntes autostereoskopisches Inscreening IS hinter der Anzeigevorrichtung wahrgenommen wird, Autostereoskopische Anzeige eins oder zwei, und resultiert ohne irgendeine Änderung am optischen Element bei der Software-Umschaltung auf der Anzeigevorrichtung der digitalen Wechselanzeige auf die Systemzahl SZ = PA ± sz, sz = 0, SZ ganzzahlig, oder ohne diese Umschaltung und Software-Umschaltung auf das Kombinationsbild mit einer Zahl der Perspektivansichten PA die Autostereoskopische Anzeige drei der Autostereoskopie mit einem optimalen Betrachtungsabstand OA = C > 0, wobei OA < NA gilt oder resultiert ohne irgendeine Änderung des optischen Elements bei der Software-Umschaltung auf der digitalen Anzeigevorrichtung ein Wechsel zwischen den Systemzahlen SZ = SZ' + sz, sz ≥ 0, SZ und SZ und SZ = SZ' - sz, sz ≥ 1, SZ und sz ganzzahlig, SZ > 0, wobei SZ' ≥ 1 eine beliebige ganze Zahl ist und wird auf der Anzeigevorrichtung der erfindungsgemäße Anzeigeinhalt angezeigt, ein Wechsel zwischen den Autoparallaktisch-Autostereoskopischen Anzeigen eins und zwei.

Der Nahbetrachtungsabstand NA ist ein trainierbarer Betrachtungsabstand A. Es gibt Betrachter, die ohne Training höhere relative Outscreenings als C/A = C/NA = OA/NA = 0,2 wahrnehmen können und näher an die digitale Wechselanzeige herantreten, OA < A < NA, und andere, die einen größeren Betrachtungsabstand A > NA = 5*C bevorzugen. Erfahrungsgemäß ist die Autostereoskopische Anzeige eins der Autoparallaktisch-Autostereoskopischen Anzeige eins bei Betrachtungsabständen A ≥ 10*C = 10*OA sofort wahrnehmbar.

An dieser Stelle ist auf die bekannte Tatsache hinzuweisen, das auch bei der Autostereoskopischen Anzeige drei Betrachter von 3D-Displays die Fähigkeit zur physiologischen Entkopplung von Akkommodation und Konvergenz besitzen müssen.

Im Fall, dass in der Autostereoskopischen Anzeige drei bei einem Multiplikator K = 1 ein zu großer optimaler Betrachtungsabstand C = OA resultiert, kann Letzterer durch einen Multiplikator K > 1, K ganzzahlig, reduziert werden, was eine Änderung des Korrekturfaktors (C - D)/C für das optische Element bedeutet. Damit werden, wie dem Fachmann bekannt sein dürfte, die pseudoskopischen Bewegungsbereiche des Betrachters zu Lasten der orthoskopischen Bewegungsbereiche vergrößert.

Im Unterschied dazu wird für den Multiplikator K ein reeller Zahlenwert vorgesehen, beispielsweise 1 < K < 2, K reelle Zahl. Eine wahrnehmbare oder störende Beeinträchtigung der stereoskopischen Kanaltrennung gegenüber dem Fall K ≥ 1, K ganzzahlig, tritt nicht ein. Der Betrachter erfährt wie im Stand der Technik auch in diesen Fällen im Mittel über alle Betrachtungspositionen in der Ebene parallel zur digitalen Wechselanzeige und im optimalen Betrachtungsabstand OA weder eine Monoansichtensituation im linken oder rechten Auge, noch eine 100%-ige stereoskopische Kanaltrennung; sein linkes und rechtes Auge sehen im Mittel jeweils mehr als nur eine Ansicht oder Teile von mehr als einer Ansicht und sogar gleiche Ansichten oder Teile gleicher Ansichten gleichzeitig mit beiden Augen.

In den Anzeigemodi Autoparallaktisch-Autostereoskopische Anzeige eins und zwei kann es aus Gründen einer visuellen Referenz zur autoparallaktischen Bewegung und zum autostereoskopischen Outscreening oder Inscreening von Vorteil sein, wenn der Anzeigeinhalt nicht auf homogenem, beispielsweise schwarzem Umfeld angezeigt wird, sondern auf einem Umfeld mit bekannten monokularen Tiefeneffekten wie beim natürlichen Sehen. Dieses kann beispielsweise erreicht werden durch vertikal bewegte, auch einfache Strukturen auf schwarzem Umfeld, wobei scheinbar weiter vorn erscheinende Strukturen sich schneller bewegen als scheinbar weiter hinten erscheinende. Ebenso können scheinbar weiter vorn erscheinende Strukturen größer und heller dargeboten werden als scheinbar weiter hinten erscheinende. Dabei soll der Anzeigeinhalt bei Autoparallaktisch-Autostereoskopischer Anzeige eins heller und farblich auffälliger als der Hintergrund oder das Umfeld gestaltet werden. Vorteilhaft kann das Umfeld des Anzeigeinhalts auch durch ein dazu passendes zweidimensionales Bild, Wechsel- oder Bewegtbild mit den bekannten monokularen 3D-Effekten ausgefüllt werden, wobei die Grundsätze der Bildgestaltung im Hinblick auf die Autoparallaxie und Autostereoskopie beachtet werden sollen. Vorteil beider Varianten ist auch die Senkung der Wahrnehmungsschwelle.

Die Autostereoskopischen Anzeigen eins und zwei der Autoparallaktisch-Autostereoskopischen Anzeigen eins und zwei unterscheiden sich von der Autostereoskopischen Anzeige drei mehrfach und deutlich. Hier seien nur sechs Unterschiede genannt:
- Durch den zusätzlichen und gleichzeitigen starken autoparallaktischen Effekt. Dieser übersteigt die orthoskopische Parallaxe der Autostereoskopischen Anzeige drei auch bei Mehransichten-Systemen mit Anzahl der Perspektivansichten PA > 2 um Größenordnungen.
- Die Autoparallaktisch-Autostereoskopischen Anzeigen eins und zwei können aus einem weiten Bereich der Betrachtungsabstände A vom Fernbetrachtungsabstand FA bis zum Nahbetrachtungsabstand NA wahrgenommen werden, während die Autostereoskopische Anzeige drei bei unverändertem optischen Element nur für einen einzigen optimalen Betrachtungsabstand OA erzeugt werden kann.
- Vorzug ist die freie Wahl des Abstandes D des optischen Elements von der Anzeigevorrichtung, während die Autostereoskopische Anzeige drei bei jeder Änderung des Abstandes D jeweils ein in seiner optischen Struktur geändertes optisches Element erfordert, wenn der optimale Betrachtungsabstand OA fest bleibt.
- Vorzug ist die 100%-ige Stereokanaltrennung, wodurch nahezu unbegrenzte Outscreenings oder Inscreenings möglich werden, während die Autostereoskopische Anzeige drei, bezogen auf den Betrachtungsabstand OA, nur geringe Outscreenings erlaubt, um beispielsweise Doppel- oder Mehrfachbilder zu vermeiden.
- Betrachter mit fehlender Fähigkeit zum Binokularsehen oder fehlender Fähigkeit zur physiologischen Entkopplung von Akkommodation und Konvergenz oder bei monokularer Betrachtung sehen bei der Autostereoskopischen Anzeige drei wegen des Kombinationsbildes aus mehreren unterschiedlichen Perspektivansichten PA ≥ 2 aufgrund der stereoskopischen Disparität dieser Ansichten ein verfälschtes, unscharfes, blasses Bild mit reduziertem Helligkeits- und Farbkontrast aus Doppel- und Mehrfachbildern. Beim vorliegenden Verfahren gibt es einen solchen Mangel prinzipiell nicht. Hier verbleiben diesen Betrachtern die unverfälschten autoparallaktischen Anzeigen der Autoparallaktisch-Autostereoskopischen Anzeigen eins und zwei.
- 3D-Displays können dem Markttrend digitaler Anzeigevorrichtungen zu immer höheren Pixeldichten 2K, 4K, 8K, 16K ... > 16K nicht problemlos folgen. Die mit jeder neuen Display-Generation wünschenswerte Verdopplung der Perspektivansichtenzahl PA ist aufnahmetechnisch unmöglich. Die Quadratur der Pixelanzahl stößt an die Leistungsgrenze der Graphikkarten beim Rendern des Kombinationsbildes. Bereits auf dem 2D-Markt fehlen regelmäßig die neuen Bildinhalte wegen leistungsschwacher Graphikkarten und zu geringer Übertragungskapazitäten bis zum Endnutzer. Demgegenüber profitiert das erfindungsgemäße Verfahren unmittelbar von der Verdopplung der linearen Pixeldichte, indem die Systemzahl SZ und in der Folge die Elementzahl EZ ohne Erhöhung der Rechnerleistung verdoppelt werden können.

Angesichts des Trends zu immer höher auflösenden 2K, 4K, 8K, 16K, ... , >16K-Displays, der mit dem Smartphone von LG mit Pixelpitch PP = 0,048 mm erneut belegt wird, und immer höherem Bildkontrast » 400:1 sind 2D-Displays mit ihren monokularen dreidimensionalen Inscreening-Effekten den 3D-Displays mit ihren verfahrensbedingt geringen Outscreenings zunehmend überlegen. Die Folge sind Marktverluste. Hier eröffnet das erfindungsgemäße Verfahren mit den zuvor beschriebenen Vorzügen, insbesondere wegen des autostereoskopischen Outscreenings der Autostereoskopischen Anzeige eins, Potenziale zur Steigerung der Attraktivität und Exklusivität visueller Anzeigen und ihrer Standorte.

### Weitere Ausführungsbeispiele:

Das erfindungsgemäße Verfahren wird anhand von Ausführungsbeispielen A und F und weiteren Beispielen B-E und G-L näher erläutert. Die Beispiele A bis F beziehen sich auf die Autoparallaktisch-Autostereoskopische Anzeige eins, Beispiel G entsprechend auf die Anzeige zwei. Die Beispiele H bis L beschreiben digitale Wechselanzeigen mit Software-Umschaltung zwischen Autoparallaktisch-Autostereoskopischer Anzeige eins und Autostereoskopischer Anzeige drei, der optimale Betrachtungsabstand OA und der Multiplikator K sind genannt.

Die Beispiele betreffen in

| | |
|---|---|
| Beispiel A | eine analoge Anzeige im DIN A4-Format für Tageslichthinterleuchtung, |
| Beispiel B | eine 3,5" OLED-Digitaluhr mit horizontaler HH : MM-Anzeige, |
| Beispiel C | eine 3,5" OLED-Digitaluhr mit vertikaler Anzeige, |
| Beispiel D | eine 32" LCD-Werbeanzeige mit vertikalen Laufschriften, |
| Beispiel E | eine 55" 2K LCD-Wechselanzeige als Architekturelement, vertikal gekachelt, |
| Beispiel | F eine 54,1" 8K LCD-Wechselanzeige für Textblock, japanische und chinesische Schriftzeichen, |
| Beispiel G | eine digitale Anzeige, auch mit Wechsel zum Beispiel 6, |
| Beispiel H | eine 54,1" 16K LCD-Wechselanzeige zur 3D-Darstellung mit OA = 8,3 m, K = 1,0, |
| Beispiel I | eine 54,1" 16K LCD-Wechselanzeige, OA = 4,2 m, K = 2,0, |
| Beispiel J | eine 54,1" 8K LCD-Wechselanzeige, auch Wechsel zum Beispiel 9, OA = 4,2 m, K = 1,0, |
| Beispiel K | eine 54,1" 16K LCD-Wechselanzeige, OA = 5,6 m, K = 1,4896, |
| Beispiel L | eine 2 x 54,1" 2K LCD-Wechselanzeige, horizontal gekachelt, OA = 3,2 m, K = 1,0. |

Die in den Ausführungsbeispielen angegebene Distanz δx ist die von einem Betrachter im Nahbetrachtungsabstand NA in der Ebene parallel zur Anzeigevorrichtung für einen kompletten Parallaxenzyklus mit dem Parallaxenwinkel α, bestehend beispielsweise aus vollständiger Sichtbarkeit des Anzeigeinhalts - vollständigem Verschwinden - vollständigem Wiedererscheinen, zurückzulegende Strecke.

### Beispiel A

In Beispiel A soll für die Autoparallaktisch-Autostereoskopische Anzeige eins eine analoge Anzeigevorrichtung und ein in Betrachtungsrichtung davor angeordnetes optisches Element verwendet werden. Die Anzeigevorrichtung ist eine Glasplatte mit einem virtuellen Raster aus quadratischen Anzeigeelementen A(k, 1) mit den Abmessungen PP = 0,150 mm. Die Elementzahl EZ = 5. Das optische Element ist eine Glasplatte mit einer transparent-schwarzopaken Barrierestruktur im Abstand D = 2,8mm, optischer Brechungsindex des Zwischenmediums n = 1, dessen transparente Elemente einen horizontalen Abstand B haben, welcher gemäß Gleichung (2) im oben zitierten Artikel von Sam H. Kaplan berechnet wird, wobei I = SZ*PP, SZ = 12, C = 269,5 mm und D = 2,8 mm einzusetzen sind. Der Korrekturfaktor für das optische Element (C - D)/C erfüllt die Ungleichung 0,9 ≤ (C - D)/C < 1,0. Die Anzeigeelemente A(k, 1) der Objekte sind entweder transparent in opakem Umfeld oder opak in transparentem Umfeld ausgebildet. Die Anzeigevorrichtung kann entweder mit Tageslicht oder Kunstlicht von hinten durchstrahlt werden.

Für alle Betrachtungsabstände 1924 mm ≤ A ≤ unendlich sind OZ ≥ 47,634, RF1 = 0,500, DZ≥12,732 mit VZ = 0,587, ZZ = 1, AZ ≥ 606, (OZ/RF1)*ZZ*SZ*PP maximal = 199, damit kann die Anzeige beispielsweise in einem DIN-A4-Bilderrahmen Platz finden, B x H = 210 mm x 297 mm. Der Parallaxenwinkel für einen kompletten Parallaxenzyklus mit totalem Verschwinden ist α ≥ 32,465 Grad. Das autostereoskopische Outscreening beträgt OS = 269,5mm.

Diese Ausgestaltung des erfindungsgemäßen Verfahrens beruht auf der Zeichnung nach Fig. 2.

In Anwendungsfällen mit eingeschränktem Bereich der Betrachtungsabstände, beispielsweise 1924 mm ≤ A ≤ 5000 mm, kann softwareseitig auf OZ ≥ 50,346 bei unverändertem optischem Element umgeschaltet werden. Die weiteren Parameter dieser Anzeige sind jetzt RF1 = 0,500, DZ ≥ 13,447, ZZ = 1, AZ = 677, (OZ/RF1)*ZZ*SZ*PP maximal = 199,410mm, α ≥ 33,918 Grad.

Ist der Betrachtungsabstand situationsbedingt nur mit A = 1924 mm realisierbar, kann softwareseitig auf OZ ≥ 55,392 bei unverändertem optischem Element umgeschaltet werden. Die weiteren Parameter Anzeige sind dann RF1 = 0,500, =14,782, ZZ = 1, AZ = 819, (OZ/RF1)*ZZ*SZ*PP maximal = 199,410mm und α = 36,495 Grad.

Der statische bildarme Anzeigeinhalt kann beispielsweise ein schwarzes christliches Kreuz auf weißem oder hellem oder farbigem Hintergrund oder umgekehrt ein weißes oder helles oder farbiges Kreuz in schwarzem Umfeld sein. Das Kreuz hat beispielsweise die Maße 83 mm x 204 mm. Im Nahbetrachtungsabstand NA beträgt die Distanz δx = 1225 mm, der Fernbetrachtungsabstand liegt bei FA = 41000 mm.

Denkbar ist auch eine beabstandete Anordnung mehrerer solcher Kreuze in Teilfenstern eines großen Kirchenfensters. Dabei ist es möglich, jedem Kirchenbesucher gleichzeitig unterschiedliche Phasen der Bewegung des Anzeigeinhaltes auf mehreren Anzeigen darzubieten. Ein im Kirchengang entlanglaufender Besucher sieht auf dem Kirchenfenster christliche Kreuze erscheinen und wieder verschwinden. Im Fall des großen, meist tageslichthellen Kirchenfensters werden vorzugsweise Teilfenster mit schwarzem Kreuz in transparentem Umfeld eingefügt. Denkbar ist auch ein großes Kirchenfenster ausfüllendes christliches Kreuz.

Selbstverständlich ist das Beispiel A nur eines der möglichen analogen Anzeigen mit statischem Anzeigeinhalt. Derartige Anzeigen mit externer oder interner Beleuchtung sind in allen Größen und Formen für bildarme Anzeigeinhalte denkbar, von wenigen Zentimetern bis zu mehreren Metern. Die Anzeigevorrichtung kann auch eine Rückprojektionsfläche sein. Damit und auf andere Weise sind dann wechselnde bildarme Anzeigeinhalte autoparallaktisch-autostereoskopisch darstellbar.

### Beispiel B

Im Beispiel B handelt es sich bei der Autoparallaktisch-Autostereoskopischen Anzeige eins um eine kleine Digitaluhr. Als Anzeigevorrichtung mit einem Subpixelraster der Anzeigeelemente A(k, 1) dient ein 3,5" OLED-Display im Querformat ohne RGB-Filter mit einer Auflösung von 768 Subpixel x 96 Subpixel und einer aktiven Fläche B x H = 84,5 mm x 32,6 mm. Der horizontale, vertikale Abstand benachbarter Subpixel beträgt PP = 0,113 mm, 0,339 mm. Die Elementzahl kann beispielsweise EZ = 3 sein. Die digitale Uhrzeit wird horizontal im HH : MM-Format angezeigt.

Das optische Element ist eine in Betrachtungsrichtung davor angeordnete Glasplatte mit einer transparent-schwarzopaken Barrierestruktur im Abstand D = 3,668 mm, dessen transparente Elemente einen horizontalen Abstand B haben, welcher gemäß Gleichung (2) im oben zitierten Artikel von Sam H. Kaplan berechnet wird, wobei I = SZ*PP, SZ = 9, C = 60 mm und D = 3,668 mm einzusetzen sind. Der Korrekturfaktor für das optische Element (C - D)/C erfüllt die Ungleichung 0,9 ≤ (C - D)/C < 1,0.

Für alle Betrachtungsabstände 1500 mm ≤ A ≤ Unendlich sind OZ ≥ 7,680, C = 60 mm, RF1 = 0,500, DZ ≥ 3,635 mit VZ = 1,000, ZZ = 5, AZ ≥ 28, (OZ/RF1)*ZZ*SZ*PP maximal = 81,356 mm. Der Parallaxenwinkel mit totalem Verschwinden ist α = 14,592 Grad. Im Nahbetrachtungsabstand NA = 1900 mm beträgt die Distanz δx = 500 mm, der Fernbetrachtungsabstand liegt bei FA = 2000 mm. Das Outscreening beträgt OS = 60 mm. Die Ziffern der digitalen Uhrzeit haben eine Höhe von beispielsweise 9 mm.

In Anwendungsfällen mit eingeschränktem Bereich der Betrachtungsabstände, beispielsweise dem Bereich 1500 mm ≤ A ≤ 3000 mm, kann softwareseitig auf OZ ≥ 7,836 bei unverändertem optischem Element umgeschaltet werden. Die weiteren Parameter der Digitaluhr sind jetzt RF1 = 0,500, DZ ≥ 3,705, ZZ = 5, AZ ≥ 29, (OZ/RF1)*ZZ*SZ*PP maximal = 81,356 mm, α ≥ 14,877 Grad.

Ist der Betrachtungsabstand situationsbedingt nur mit A = 1500 mm realisierbar, kann softwareseitig auf OZ ≥ 8,000 bei unverändertem optischem Element umgeschaltet werden. Die weiteren Parameter der Digitaluhr sind dann RF1 = 0,500, DZ = 3,778, ZZ = 5, AZ = 30, (OZ/RF1)*ZZ*SZ*PP = 81,356 mm und α = 15,173 Grad.

### Beispiel C

Im Beispiel C handelt es sich ebenfalls um eine kleine Digitaluhr mit gleicher Anzeigevorrichtung wie im Beispiel B. Die digitale Uhrzeit wird jedoch vertikal angezeigt: Stundenziffern über den Minutenziffern und Doppelpunkt dazwischen. Die Elementzahl EZ = 8.

Das optische Element ist eine in Betrachtungsrichtung im Abstand D = 6,258 mm davor angeordnete Glasplatte wie in Beispiel B mit horizontalem Strukturabstand B, der gemäß Gleichung (2) im oben zitierten Artikel von Sam H. Kaplan berechnet wird, wobei I = SZ*PP, SZ = 21, C = 150 mm und D = 6,258 mm einzusetzen sind. Der Korrekturfaktor für das optische Element erfüllt die Ungleichung 0,9 ≤ (C - D)/C < 1,0.

Für alle Betrachtungsabstände 1500 mm ≤ A ≤ unendlich sind OZ ≥ 11,485, C = 150 mm, RF1 = 0,500, DZ ≥ 2,699 mit VZ = 1,365, ZZ = 1, AZ ≥ 31, (OZ/RF1)*ZZ*SZ*PP maximal = 60,564 mm. Der Parallaxenwinkel α für einen kompletten Parallaxenzyklus mit totalem Verschwinden beträgt α = 19,970 Grad. Im Nahbetrachtungsabstand NA = 1500 mm ist die Distanz δx = 576 mm, der Fernbetrachtungsabstand liegt bei FA = 3000 mm. Das autostereoskopische Outscreening beträgt OS = 150 mm. Die Ziffern der digitalen Uhrzeit haben beispielsweise eine Höhe von 13 mm.

Diese Ausgestaltung des erfindungsgemäßen Verfahrens beruht auf der Zeichnung nach Fig. 2.

In Anwendungsfällen mit eingeschränktem Bereich der Betrachtungsabstände, beispielsweise dem Bereich 1500 mm ≤ A ≤ 3000 mm, kann softwareseitig auf OZ ≥ 12,089 bei unverändertem optischem Element umgeschaltet werden. Die weiteren Parameter dieser Digitaluhr sind jetzt RF1 = 0,500, DZ ≥ 2,836, ZZ = 1, AZ ≥ 34, (OZ/RF1)*ZZ*SZ*PP maximal = 60,564 mm, α ≥ 20,932 Grad.

Ist der Betrachtungsabstand situationsbedingt nur mit A = 1500 mm realisierbar, kann softwareseitig auf OZ ≥ 12,761 bei unverändertem optischem Element umgeschaltet werden. Die weiteren Parameter dieser Digitaluhr sind dann RF1 = 0,500, DZ = 2,987, ZZ = 1, AZ = 78, (OZ/RF1)*ZZ*SZ*PP maximal = 60,564 mm und α = 21,987 Grad.

An Beispiel C soll, neben der Tatsache, dass beim erfindungsgemäßen Verfahren nicht nur ein einziger "optimaler" Betrachtungsabstand existiert, sondern alle Betrachtungsabstände 1500 mm ≤ A ≤ unendlich "optimale" autostereoskopisch-autoparallaktische Betrachtungsabstände sind, gezeigt werden, dass auch beliebige Abstände D ≠ 0 zwischen optischem Element und Anzeigevorrichtung ohne neues optisches Element eingestellt werden können. Bei einem Abstand D = 3,000 mm sind die Änderungen klein.

Für alle Betrachtungsabstände 1500 mm ≤ A ≤ unendlich sind OZ ≥ 11,485, C = 72 mm, RF1 = 0,500, DZ ≥ 2,699 mit VZ = 1,365, ZZ = 1, AZ ≥ 31, (OZ/RF1)*ZZ*SZ*PP maximal = 57,252 mm. Der Parallaxenwinkel α für einen Parallaxenzyklus mit totalem Verschwinden ist α = 37,162 Grad. Im Nahbetrachtungsabstand NA = 1500 mm beträgt die Distanz δx = 1000 mm, der Fernbetrachtungsabstand liegt bei FA = 3000mm. Das autostereoskopische Outscreening beträgt OS = 72 mm. Die Ziffern haben unverändert eine Höhe von 13mm.

Das Verfahren ermöglicht somit durch eine Änderung des Abstandes D eine Änderung des autoparallaktischen Parallaxenwinkels α und des autostereoskopischen Outscreenings OS, ohne wesentliche Änderung der übrigen Parameter. FA bleibt unverändert, NA < 1500 mm ist möglich. Das optische Element bleibt auch hinsichtlich seiner azimutalen Orientierung und seiner optischen Struktur unverändert.

In Anwendungsfällen mit eingeschränktem Bereich der Betrachtungsabstände, beispielsweise dem Bereich 1500 mm ≤ A ≤ 3000 mm, kann softwareseitig auf OZ ≥ 11,767 bei unverändertem optischem Element umgeschaltet werden. Die weiteren Parameter dieser Digitaluhr sind jetzt RF1 = 0,500, DZ ≥ 2,763, ZZ = 1, AZ ≥ 33, (OZ/RF1)*ZZ*SZ*PP maximal = 57,252 mm, α ≥ 37,833 Grad.

Ist der Betrachtungsabstand situationsbedingt nur mit A = 1500 mm realisierbar, kann softwareseitig auf OZ ≥ 12,063 bei unverändertem optischem Element umgeschaltet werden. Die weiteren Parameter sind dann RF1 = 0,500, DZ = 2,830, ZZ = 1, AZ = 34, (OZ/RF1)*ZZ*SZ*PP maximal = 57,252 mm und α = 38,526 Grad.

Das Verfahren kann auch Anwendung finden, wenn in einer selektiven Anzeige nur eine Gruppe von Personen den Anzeigeinhalt sehen soll, nicht aber seitlich benachbarte Personen oder Personengruppen. Denkbar ist das für andere Anzeigeinhalte als eine digitale Uhrzeit. Dazu wird das erfindungsgemäß unveränderte optische Element beispielsweise in einem Abstand D = 0,401 mm vor der Anzeigevorrichtung angeordnet. Der Parallaxenwinkel α mit totalem Verschwinden liegt bei α = 80 Grad. Bei unveränderten Parametern OZ, DZ, AZ, ZZ kann eine deutliche Vergrößerung des Parallaxenwinkels α erreicht werden.

Mittels Justierung des optischen Elements relativ zur Anzeigevorrichtung in horizontaler Richtung so, dass die vollständige Sichtbarkeit des Anzeigeinhaltes beim Blick aus Normalenrichtung auf die Anzeigevorrichtung in deren Mitte zu sehen ist, sieht eine Personengruppe diesen bis zu dessen vollständigem Verschwinden in einem Winkelbereich von ± 20 Grad. Personen oder Personengruppen links und rechts außerhalb dieses Winkelbereiches in Winkelbereichen von 40 Grad können auf der Anzeige die Anzeigeinhalte nicht sehen, da diese infolge der selektiven Anzeige für sie verschwunden sind.

Für alle Betrachtungsabstände 1500 mm ≤ A ≤ Unendlich sind OZ ≥ 11,485, RF1 = 0,500, DZ ≥ 2,699 mit VZ = 1,365, ZZ = 1, AZ ≥ 31, (OZ/RF1)*ZZ*SZ*PP maximal = 54,859 mm. Der Parallaxenwinkel α für einen kompletten Parallaxenzyklus mit totalem Verschwinden beträgt α = 80 Grad.

Bei dieser Auslegung des Verfahrens wird die Autoparallaktisch-Autostereoskopische Anzeige eins wegen des Outscreenings von OS = 9,6mm praktisch auf eine Autoparallaktische Anzeige eins reduziert.

In Anwendungsfällen mit eingeschränktem Bereich der Betrachtungsabstände, beispielsweise dem Bereich 1500mm ≤ A ≤ 3000mm, kann softwareseitig auf OZ ≥ 11,522 bei unverändertem optischem Element umgeschaltet werden. Die weiteren Parameter sind jetzt RF1 = 0,500. DZ ≥ 2,708, ZZ = 1, AZ = 31, (OZ/RF1)*ZZ*SZ*PP maximal = 54,859mm, α ≥ 80,031 Grad.

Ist der Betrachtungsabstand situationsbedingt nur mit A = 1500 mm realisierbar, kann softwareseitig auf OZ ≥ 11,559 bei unverändertem optischem Element umgeschaltet werden. Die weiteren Parameter sind dann RF1 = 0,500, DZ = 2,716, ZZ = 1, AZ = 31, (OZ/RF1)*ZZ*SZ*PP maximal = 54,859 mm und α = 80,062 Grad.

Der Betrachter kann erfindungsgemäß seinen Betrachtungsabstand, ohne dass ein neues optisches Element hergestellt werden muss, auch kleiner als A = NA = 1500 mm wählen, wenn das notwendig oder gewünscht ist, beispielsweise den Betrachtungsabstand NA = 500 mm oder auch NA = 350 mm. Bei vernachlässigbaren Änderungen der Anzeigeparameter OZ, RF1, DZ, AZ bleibt auch der Parallaxenwinkel α = 80 Grad fast unverändert. Im Nahbetrachtungsabstand NA = 350 mm beträgt die Distanz δx = 500 mm, der Fernbetrachtungsabstand liegt unverändert bei FA = 3000 mm.

Vorzugsweise ist das optische Element eine erfindungsgemäße Lens Barrier Optic. Die Linsendicke der plankonvexen Zylinderlinsen des Linsenrasters der Lens Barrier Optic beträgt beispielsweise D' = 3,9700 mm, der optische Brechungsindex n = 1,5, die Brennweite f' = 2,6420 mm, die Scheitelhöhe h = 0,6485 mm, die Brennpunktschnittweite s'f' = - 0,0047 mm. Die Barriere wird auf die betrachterabgewandte Planfläche des Linsenrasters so aufgebracht, dass die Scheitellinien der plankonvexen Zylinderlinsen bei Parallelprojektion jeweils der Mitte der transparenten Streifen der Barriere gegenüberstehen.

Die erfindungsgemäße Lens Barrier Optic unterscheidet sich von der in DE 10 2009 054 706 A1 und WO 002011082992 A2 beschriebenen Chromatic-Light-Deflector-Anordnung aus Linsenraster mit rückseitiger Barriere genannter transparent-opaker Beschichtung wesentlich im Hinblick auf den Aufbau, die beabsichtigte Wirkung, die optische Abbildung und die optische Qualität. Der in dieser Schrift verwendete Begriff der Barriere ist bei Anwendung derartiger Schirme in der Autostereoskopie irreführend. Diese lichtblockierende Schicht dient der Minderung der optischen Störungen durch die unvermeidbaren konkaven Teile der konvex-konkaven Struktur und reduzieren außerdem die Helligkeit ([0010]: "Ein weiterer Effekt der Aufbringung einer Barrierestruktur liegt darin, dass der Bildkontrast erhöht wird. Dies ist auf die Tatsache zurückzuführen, dass die Helligkeit des Bildschirms durch die Verwendung einer opaken Barrierestruktur verringert wird."). Die Unterschiede zwischen der erfindungsgemäßen Lens Barrier Optic und dem Chromatic-Light-Deflector-Schirm sind offensichtlich. Siehe dort beispielsweise die Figuren 1 bis 3.

Auf zwei wesentliche Unterschiede muss hingewiesen werden. In der Anordnung nach DE 10 2009 054 706 A1 erfolgt zum einen und wie bei allen autostereoskopischen Displays mit Linsenraster die optische Abbildung des Kombinationsbildes auf der Bildwiedergabefläche der Bildwiedergabevorrichtung durch das Linsenraster in den Betrachtungsraum, während in der vorliegenden Erfindung die optische Abbildung der Barriere durch das plankonvexe Zylinderlinsenraster in den Betrachtungsraum erfolgt. Die Lens Barrier Optic ist somit optisch von der erfindungsgemäßen Anzeigevorrichtung entkoppelt. Das erlaubt daher Veränderungen des Abstandes D, beispielsweise die oben beschriebene von D = 6,258 mm auf D = 3,000mm. Zum anderen und zusätzlich zu der Tatsache, dass autostereoskopische Displays mit deutlich mehr als 25 Perspektivansichten nicht bekannt sind, sind Helligkeitsgewinn und maximaler Schrägsichtwinkel bei der Lens Barrier Optic größer als mit der wellenartigen konvex-konkaven Struktur des Linsenrasters nach DE 10 2009 054 706 A1. Entscheidend für Helligkeitsgewinn und Schrägsichtwinkel ist die vom Betrachter wahrnehmbare optische Lupenvergrößerung durch das Linsenraster, die nahe ± unendlich liegen soll. Die Lupenvergrößerung der rückseitigen Barriere durch die plankonvexen Zylinderlinsen der hier offenbarten Lens Barrier Optic wird im Betrachtungsabstand A = 1498,3914 mm V = ± unendlich. Damit ist mit der erfindungsgemäßen Lens Barrier Optic ein Helligkeitsgewinn aufgrund der Leuchtdichteinvarianz bei idealer optischer Abbildung von bis zu 21-fach erreichbar.

### Beispiel D

Die Autoparallaktisch-autostereoskopische Anzeige eins im Beispiel D ist ein 32" LCD mit RGB Subpixelraster, das wegen der vertikalen Anzeigeinhalte im Hochformat verwendet wird. Der horizontale und vertikale Pixelabstand beträgt PP = 0,519 mm, die Auflösung 1360 Pixel x 768 Pixel, die aktive Fläche B x H = 705,84 mm x 398,592 mm.

Das optische Element ist eine Glasplatte mit einer transparent-schwarzopaken Barrierestruktur im Abstand D = 17,0 mm, die vorzugsweise in Betrachtungsrichtung hinten auf der Glasplatte angeordnet ist, sodass der optische Brechungsindex des Zwischenmediums fast ausschließlich den Wert n = 1,0 hat und deren transparente Elemente einen horizontalen Abstand B haben, welcher gemäß Gleichung (2) im oben zitierten Artikel von S. Kaplan berechnet wird, wobei I = SZ*PP, SZ = 6, C = 284 mm und D = 17,0 mm einzusetzen sind. Der Korrekturfaktor für das optische Element (C - D)/C erfüllt die Ungleichung 0,9 ≤ (C - D)/C < 1,0.

Für alle Betrachtungsabstände 2500 mm ≤ A ≤ unendlich ist OZ so auszuwählen, dass das Produkt (OZ/RF)*SZ ganzzahlig ist und im Bereich (OZ/RF)*SZ = 97 bis 106 liegt. Weiter sind D = 17,0 mm, C = 283,6 mm, RF2 = 1,000, DZ ≥ 4,404 mit VZ = 0,584, ZZ = 7, AZ = 69, (OZ/RF2)*ZZ*SZ*PP maximal = 385,620 mm mit SZ = 6. Der Parallaxenwinkel für einen kompletten Parallaxenzyklus mit Sichtbarkeit komplementärer Teile des Anzeigeinhaltes liegt über α = 9,770 Grad. Im Nahbetrachtungsabstand NA = 2600 mm beträgt die Distanz δx = 500mm, der Fernbetrachtungsabstand liegt bei FA = 9500 mm. Das autostereoskopische Outscreening beträgt OS = 284 mm.

In Anwendungsfällen mit eingeschränktem Bereich der Betrachtungsabstände, beispielsweise dem Bereich 2500 mm ≤ A ≤ 5000 mm, kann softwareseitig auf OZ gemäß (OZ/RF)*SZ = 100 bis 106, (OZ/RF)*SZ ganzzahlig, bei unverändertem optischem Element umgeschaltet werden. Die weiteren Parameter sind jetzt RF2 = 1,000, DZ ≥ 4,653, ZZ = 7, AZ = 77, (OZ/RF1)*ZZ*SZ*PP maximal = 385,620 mm, α ≥ 10,346 Grad.

Ist der Betrachtungsabstand situationsbedingt nur mit A = 2500 mm realisierbar, kann softwareseitig auf OZ ≥ 17,691, (OZ/RF)*SZ = 106, bei unverändertem optischem Element umgeschaltet werden. Die weiteren Parameter sind dann RF2 = 1,000, DZ = 4,934, ZZ = 7, AZ = 87, (OZ/RF2)*ZZ*SZ*PP maximal = 385,620 mm und α = 10,992 Grad.

Die Autoparallaktisch-Autostereoskopische Anzeige eins nach Beispiel D ermöglicht vertikal von oben nach unten bewegte, also fallende und/oder von unten nach oben, also aufsteigende Laufschriften gleichzeitig oder nacheinander auf den Zonen 1, 3, 5, 7 mit gleichem oder verschiedenem Laufschrifteninhalt oder vertikale fallende oder aufsteigende Laufschriften auf allen 7 oder auf weniger als 7 benachbarten Zonen zeitlich nacheinander. Die einzelnen Schriftzeichen fallender, aufsteigender Laufschriften sind zweckdienlich um 90° nach links, rechts gekippt. Derartige vertikale Schriften mit gekippten Buchstaben, Ziffern und/oder anderen Zeichen sind der Technik nicht unbekannt.

Wird softwareseitig von RF2 = 1,0 auf RF1 = 0,50 umgeschaltet, sind vertikal fallende und/oder aufsteigende Laufschriften auf benachbarten Zonen gleichzeitig auch mit verschiedenem Anzeigeinhalt darstellbar, beispielsweise eine horizontale Uhrzeit im HH : MM-Format auf den Zonen 2 bis 6.

Die Ausprägung des Verfahrens nach Beispiel D eignet sich beispielsweise für Werbezwecke. Flächen, die auf dem LCD jeweils örtlich und/oder zeitlich nicht für die autoparallaktisch-autostereoskopischen Anzeigen genutzt werden, können mit passenden, bildhaften Werbeinformationen gefüllt werden.

### Beispiel E

Im Beispiel E handelt es sich um ein attraktives und exklusives Architekturelement für repräsentative Bauwerke im Innen- und Außenbereich. Die Autoparallaktisch-Autostereoskopische Anzeige eins ist eine Großanzeige und besteht aus vertikal angeordneten kachelbaren 55" LC-Displays, die im Hochformat rahmenlos übereinander in das Gebäude eingefügt werden. Die RGB-Pixelabmessungen sind horizontal und vertikal PP = 0,630 mm, die Auflösung ist 1920 Pixel x 1080 Pixel, die aktive Fläche beträgt B x H = 1209,6 mm x 680,4 mm. Auf der Anzeigewand wird eine auch aus großer Entfernung sichtbare vertikale Laufschrift dargestellt.

Das optische Element ist eine Glasplatte mit einer transparent-schwarzopaken Barrierestruktur im Abstand D = 15,1 mm, dessen transparente Elemente einen horizontalen Abstand B haben, welcher gemäß Gleichung (2) im oben zitierten Artikel von Sam H. Kaplan berechnet werden kann, wobei I = SZ*PP, SZ = 12, C = 718,5 mm und D = 15,1 mm einzusetzen sind. Der Korrekturfaktor für das optische Element (C - D)/C erfüllt die Ungleichung 0,9 ≤ (C - D)/C < 1,0.

Für alle Betrachtungsabstände 4875 mm ≤ A ≤ unendlich sind OZ ≥ 23,274, D = 15,1 mm, C = 718,0 mm, RF1 = 0,50, DZ ≥ 7,425 mit VZ = 0,874 ZZ = 1,0, AZ ≥ 144, (OZ/RF1)*ZZ*SZ*PP maximal = 412,673 mm mit SZ = 12. Der Parallaxenwinkel für einen kompletten Parallaxenzyklus mit totalem Verschwinden liegt über α = 26,111 Grad. Im Nahbetrachtungsabstand NA = 4875mm beträgt die Distanz δx = 2543 mm, der Fernbetrachtungsabstand liegt bei FA = 35000 mm. Das autostereoskopische Outscreening beträgt OS = 718 mm.

Diese Ausgestaltung des erfindungsgemäßen Verfahrens beruht auf der Zeichnung nach Fig. 2. Die Breite der gekippten Zeichen der vertikalen Laufschriftanzeige ist nicht größer als 172 mm. Eine vertikale Kachelwand mit einer Höhe von 7,25 m kann eine Laufschrift aus 42 Zeichen darstellen. Diese Ausgestaltung des Verfahrens ist für große Betrachtungsabstände A ausgelegt.

In Anwendungen mit dem Bereich 4875 mm ≤ A ≤ 20000 mm kann softwareseitig auf OZ ≥ 24,140 bei unverändertem optischem Element umgeschaltet werden. Die weiteren Parameter sind RF1 = 0,500, DZ ≥ 7,696, ZZ = 1, AZ ≥ 157, (OZ/RF1)*ZZ*SZ*PP maximal = 412,673 mm, α ≥ 26,948 Grad.

Ist der Betrachtungsabstand situationsbedingt nur mit A = 4875 mm realisierbar, kann softwareseitig auf OZ ≥ 27,293 bei unverändertem optischem Element umgeschaltet werden. Die weiteren Parameter sind dann RF1 = 0,500, DZ = 8,681, ZZ = 7, AZ = 210, (OZ/RF2)*ZZ*SZ*PP maximal = 412,673 mm und α = 29,890 Grad.

Die Ausgestaltung des Verfahrens kann allein softwareseitig so modifiziert werden, dass die vertikale Laufschrift bei Seitwärtsbewegung der Betrachter nicht total verschwindet und aus beliebigen Positionen im Betrachtungsraum stets mindestens ein Teil der Laufschrift sichtbar ist.

Für alle Betrachtungsabstände 4875 mm ≤ A ≤ unendlich sind OZ ≥ 32,583. D = 15,1 mm, C = 718 mm, RF2 = 0,70, DZ ≥ 7,425 mit VZ = 0,874, AZ ≥ 144, (OZ/RF1)*ZZ*SZ*PP maximal = 412,673 mm. Der Parallaxenwinkel für einen kompletten Parallaxenzyklus mit Sichtbarkeit komplementärer Teile der Laufschrift liegt über α = 26,111 Grad.

Die Breite der gekippten Zeichen und die darstellbare Zeichenzahl bleiben unverändert.

Wird der Abstand D des ansonsten unveränderten optischen Elements von D = 15,1 mm auf D = 3,0 mm verringert, resultieren folgende Parameter der Laufschriftanzeige:

Für alle Betrachtungsabstände 980 mm ≤ A ≤ unendlich sind OZ ≥ 23,274. D = 3,0 mm, C = 142,6 mm, RF1 = 0,500, DZ ≥ 7,425 mit VZ = 0,874, ZZ = 1,0, AZ ≥ 144 Ansichten, (OZ/RF1)*ZZ*SZ*PP maximal = 411,841 mm. Der Parallaxenwinkel für einen kompletten Parallaxenzyklus mit totalem Verschwinden liegt über α = 67,935 Grad. Im Nahbetrachtungsabstand NA = 980 mm beträgt die Distanz δx = 1213 mm, der Fernbetrachtungsabstand liegt bei FA = 34000 mm. Das Outscreening beträgt OS = 143 mm.

Diese Ausgestaltung des erfindungsgemäßen Verfahrens beruht auf der Zeichnung nach Fig. 2.

Die Breite der gekippten Zeichen und die darstellbare Zeichenzahl bleiben unverändert. Vorteile dieser Ausgestaltung sind der vergrößerte Parallaxenwinkel und neben großen Betrachtungsabständen 4875 mm ≤ A ≤ 34000 mm auch beliebig kleine Betrachtungsabstände bis herab zu A = 980 mm.

Eine Reduzierung des Abstandes D, der, wie gezeigt, ohne neue optische Elemente für jeden Abstand D möglich ist, verursacht bei einer Kachelwand aus mehreren 55" LCD dennoch einen hohen Aufwand. Das Verfahren ermöglicht aber zusätzlich zu der beschriebenen Hardwarelösung auch eine Softwarelösung. Diese beruht auf einer softwareseitigen Änderung der Zonenzahl ZZ auf der Anzeigevorrichtung. Wird ZZ von ZZ = 1 um zz = 6 auf ZZ = 7 erhöht, ergeben sich die folgenden Anzeigeparameter:

Für alle Betrachtungsabstände 1200 mm ≤ A < unendlich ist OZ so auszuwählen, dass das Produkt (OZ/RF)*SZ ganzzahlig ist und im Bereich (OZ/RF)*SZ = 124 bis 140 liegt, sind D = 15,1 mm, C = 156,7 mm, RF1 = 0,500, DZ ≥ 1,496 mit VZ = 0,874 und SZ = 13, AZ ≥ 5,4, (OZ/RF1)*ZZ*SZ*PP maximal = 618,564 mm. Der Parallaxenwinkel für einen kompletten Parallaxenzyklus mit totalem Verschwinden liegt über α = 26,111 Grad. Im Nahbetrachtungsabstand NA = 1200 mm beträgt die Distanz δx = 616 mm, der Fernbetrachtungsabstand liegt bei FA = 6900 mm. Das Outscreening beträgt OS = 157 mm.

Die Breite der gekippten Zeichen der vertikalen Laufschriftanzeige ist nicht größer als 34 mm. Eine vertikale Kachelwand mit einer Höhe von 7,25 m kann eine Laufschrift aus 200 Zeichen darstellen.

Vorzüge dieser Softwarelösung sind neben der Erweiterung des Bereiches der Betrachtungsabstände bis herab zu A = 1200 mm und kleiner und der größeren Zeichenanzahl die Darstellung nicht nur einer einzigen Laufschrift auf der Kachelwand, sondern bis zu 7 Laufschriften. In diesem Ausführungsbeispiel können wegen des Reduktionsfaktors RF1 = 0,500 gleichzeitig alle 7 Zonen mit verschiedenen Anzeigeinhalten belegt werden. Vertikal bewegte und/oder unbewegte Anzeigeinhalte sind gleichzeitig erlaubt.

Selbstverständlich ist der Softwarewechsel zwischen den Anzeigen mit ZZ = 1 und ZZ = 7 jederzeit möglich. Solche Wechsel erhöhen die Attraktivität und Exklusivität des Architekturelements.

Wie bei barrierebasierten 3D-Displays ist neben dem Helligkeitsverlust die Auffälligkeit der transparent-schwarzopaken Barrierestruktur auch bei der erfindungsgemäßen barrierebasierten Anzeige unerwünscht. Mit Hilfe der erfindungsgemäßen Lens Barrier Optic kann auch dieser Mangel weitgehend beseitigt werden. Dazu wird die Barriere hinsichtlich Abstand D, azimutaler Orientierung und optischer Struktur durch die rückseitige Barriere der Lens Barrier Optic mit identischen Parametern ersetzt. Eine Änderung der optischen Struktur hinsichtlich der Verhältniszahl VZ ist erlaubt. Wegen unverändertem Korrekturfaktor (C - D)/C ergeben sich keine Änderungen am Linsenraster.

Für die beschriebene Wechselanordnung der Laufschriftanzeige hat die Lens Barrier Optic beispielsweise folgende Parameter: Linsendicke der plankonvexen Zylinderlinsen D' = 12,00500 mm, optischer Brechungsindex n = 1,5, Brennweite f' = 7,99000 mm, Scheitelhöhe h = 2,4896 mm, Brennpunktschnittweite s'f' = - 0,0133 mm. Die Lupenvergrößerung V der rückseitigen Barriere durch die plankonvexen Zylinderlinsen im Betrachtungsabstand A = 4795,9975 mm ist V = ± unendlich. Die Lens Barrier Optic vereint die Vorzüge von Zylinderlinsenrastern mit der Abstandsvariabilität von Barrieren.

### Beispiel F

Im Beispiel F handelt es sich nun um die Anzeige von Text in horizontaler Leserichtung. Die Autoparallaktisch-Autostereoskopische Anzeige eins verwendet als Anzeigevorrichtung ein 8 K 54,1" LC-Display ohne RGB-Filter im Querformat. Der horizontale, vertikale Abstand benachbarter Subpixel beträgt PP = 0,052 mm, 0,156 mm, die Auflösung ist 7680 Pixel x 4320 Pixel, die aktive Fläche beträgt B x H = 1198,1 mm x 673,9 mm.

Die technische Entwicklung geht zu immer höheren Pixeldichten. LCD mit RGB-Pixelpitch PP = 0,048 mm, Subpixelpitch PP = 0,016 mm werden beherrscht. Ein Beispiel dafür ist das oben erwähnte Smartphone LG G3 mit 5,5" TFT-IPS-Display und 534ppi. Wie in der Natur werden dem sich evolutionär herausgebildeten Sehapparat auch hier Feinheiten unterhalb des Auflösungsvermögens angeboten.

Das optische Element ist eine davor angeordnete Glasplatte mit einer transparent-schwarzopaken Barrierestruktur im Abstand D = 5,0 mm, dessen transparente Elemente einen horizontalen Abstand B haben, welcher gemäß Gleichung (2) im oben zitierten Artikel von Sam H. Kaplan berechnet werden kann, wobei I = SZ*PP, SZ = 120, C = 650 mm und D = 5,0 mm einzusetzen sind. Der Korrekturfaktor für das optische Element erfüllt die Ungleichung 0,9 ≤ (C - D)/C < 1,0. Vorzugsweise ist das optische Element eine Lens Barrier Optic.

Die Ausführung nach Beispiel F erlaubt die Anzeige von horizontal lesbarem Text aus aufrecht orientierten Buchstaben, Ziffern, Sonderzeichen als einzelne Zeile oder mehrzeiliger, zeitlich auch wechselnder und/oder vertikal bewegter Textblock. Die Parameter dieser Ausführung sind beispielsweise folgende:

Für alle Betrachtungsabstände 2500 mm ≤ A ≤ unendlich sind OZ ≥ 64,500, D = 5,0 mm, C = 650,0 mm, RF1 = 0,500, DZ ≥ 3,250 mit VZ = 2,000, SZ = 120, ZZ = 1,0, AZ ≥ 189,(OZ/RF1)*ZZ*SZ*PP maximal = 1087,784 mm. Der Parallaxenwinkel für einen kompletten Parallaxenzyklus mit totalem Verschwinden liegt bei α ≥ 51,079 Grad. Im Nahbetrachtungsabstand NA = 2500 mm beträgt die Distanz δx = 2580 mm, der Fernbetrachtungsabstand liegt bei FA = 11000 mm. Das autostereoskopische Outscreening beträgt OS = 650 mm.

Die Höhe der aufrechten Zeichen des Textes ist nicht kleiner als 47 mm. Auf der Anzeigefläche von 1198,1 mm x 673,9 mm kann ein Textblock aus ungefähr 6 Zeilen mit einfachem Zeilenabstand und 9 Zeichen in jeder Zeile dargestellt werden.

Diese Ausgestaltung des erfindungsgemäßen Verfahrens beruht auf der Zeichnung nach Fig. 2.

Wird das unveränderte optische Element statt im Abstand D = 5,0 mm im Abstand D = 1,0 mm vor der Anzeigevorrichtung angebracht, resultieren folgende Parameter:

Für alle Betrachtungsabstände 500 mm ≤ A ≤ unendlich sind OZ ≥ 64,500, D = 1,000 mm, C = 130 mm, RF1 = 0,500, DZ ≥ 3,250 mit VZ = 2,000, SZ = 120, ZZ = 1,0, AZ ≥ 189, (OZ/RF1)*ZZ*SZ*PP maximal = 1087,875 mm. Der Parallaxenwinkel für einen kompletten Parallaxenzyklus mit totalem Verschwinden liegt bei α ≥ 80,826 Grad. Im Nahbetrachtungsabstand NA = 500 mm beträgt die Distanz δx = 726 mm, der Fernbetrachtungsabstand liegt bei FA = 10900 mm. Das autostereoskopische Outscreening beträgt OS = 130 mm. Diese Ausführung ist für kleinere Betrachtungsabstände A geeignet.

Die Anzahl der Zeilen und Zeichen je Zeile bleibt unverändert.

Diese Ausgestaltung des erfindungsgemäßen Verfahrens beruht auf der Zeichnung nach Fig. 2.

Die mechanische Änderung des Abstandes D, der für jeden Abstand D ohne neue optische Elemente möglich ist, kann auch vermieden werden. Das Verfahren ermöglicht zusätzlich zu der Hardwarelösung eine Softwarelösung wie im Beispiel E und beruht auf der Änderung der Zonenzahl ZZ auf der Anzeigevorrichtung von ZZ = 1 um zz = 1 auf ZZ = 2, woraus sich die folgenden Anzeigeparameter ergeben:

Für alle Betrachtungsabstände 950 mm ≤ A ≤ unendlich sind OZ ≥ 30,960, D = 5,000 mm, C = 314,6 mm, RF1 = 0,500, DZ ≥ 1,560 mit VZ = 2,000, SZ = 121, ZZ = 2,0, AZ ≥ 43, (OZ/RF1)*ZZ*SZ*PP maximal = 1165,754 mm. Der Parallaxenwinkel für einen kompletten Parallaxenzyklus mit totalem Verschwinden liegt bei α ≥ 51,079 Grad. Im Nahbetrachtungsabstand NA > 950 mm beträgt die Distanz δx > 1021 mm, der Fernbetrachtungsabstand liegt bei FA = 5200 mm. Das autostereoskopische Outscreening beträgt OS = 314 mm.

Die Höhe der aufrechten Zeichen des Textes ist nicht kleiner als 22 mm. Auf der Anzeigefläche von ½ x 1198,1 mm x 673,9 mm kann in jeder Zone ein Textblock aus ungefähr 10 Zeilen mit einfachem Zeilenabstand und 9 Zeichen in jeder Zeile dargestellt werden.

Vorteil dieser softwareseitigen Umschaltung ist insbesondere die gleichzeitige Anzeige von zwei Textblöcken unterschiedlichen Inhalts als zweispaltige Anzeige.

Diese Ausführung des erfindungsgemäßen Verfahrens beruht auf der Zeichnung nach Fig. 3.

Wird statt des Reduktionsfaktors RF1 = 0,50 auf RF2 = 1,0 softwareseitig umgeschaltet, resultiert eine Objektzahl OZ ≥ 61,920 bei sonst unveränderten Parametern. Wird des Weiteren eine der beiden Zonen vollständig von einer autoparallaktisch-autostereoskopischen Ansicht freigehalten, kann ein Textblock mit ungefähr 10 Zeilen und 19 Zeichen pro Zeile als einspaltige Anzeige angezeigt werden.

Diese Ausgestaltung des erfindungsgemäßen Verfahrens beruht auf der Zeichnung nach Fig. 4.

Ein besonderer Vorteil dieser Ausführung ist der große Bewegungsbereich jedes Betrachters von 28 Grad, in welchem der einspaltige Textblock vollständig sichtbar bleibt.

Selbstverständlich kann der ein- oder zweispaltige Textblock aus jeweils ungefähr 10 Zeilen in einen ein- oder zweispaltigen Lauftext mit beliebiger Zeilenzahl > 10 Zeilen ausgebildet werden, indem dieser softwareseitig in vertikaler Richtung aufsteigend oder fallend bewegt wird, wodurch den Betrachtern die Zeilen 11, 12, 13 ... oder 0, -1, -2 ... dargeboten werden. Beim einspaltigen Textblock kann die vertikale Bewegung kontinuierlich erfolgen.

Erfolgt im Fall D = 1,0 mm die Justierung des optischen Elements relativ zur Anzeigevorrichtung in horizontaler Richtung so, dass die vollständige Sichtbarkeit des Textblockes bei senkrechtem monokularem Blick auf die Anzeigevorrichtung möglich ist, sieht eine Personengruppe den Textblock dort bis zu dessen vollständigem Verschwinden in einem Winkelbereich von ± 19 Grad. Personen oder Personengruppen links und rechts außerhalb dieses Winkelbereiches in Winkelbereichen von 43 Grad können den Textblock nicht sehen.

Vorzug der Ausführung nach Beispiel F ist neben der gewohnten horizontalen Leserichtung die Möglichkeit, bildarme Anzeigeinhalte in Form von Mustern mit Auflösungen von beispielsweise 120 x 67 quadratischen Bildelementen oder 120 x (1 bis 4320) Bildelementen bei einem Reduktionsfaktor RF2 = 1,0 darstellen zu können.

Mit dem Reduktionsfaktor RF1 = 0,5 für totales Verschwinden und beispielsweise einer Elementzahl EZ = 50 erlaubt das Verfahren die autoparallaktisch-autostereoskopische Anzeige beispielsweise japanischer KATAKANA-Zeichen oder chinesischer Schriftzeichen mit vertikalen Abmessungen bis 470 mm. Diese Zeichen erscheinen bei Eigenbewegung jedes Betrachters unter dem autoparallaktischen Parallaxenwinkel der Autoparallaktisch-Autostereoskopischen Anzeige eins von α = 51 Grad gleichzeitig mit dem autostereoskopischen Outscreening von OS = 650 mm in Betrachtungsabständen 2500 mm ≤ A ≤ 39000 mm gut erkennbar unter einem Sehwinkel nicht kleiner als 30 Winkelminuten.

Der Schutzumfang der Erfindung umfasst nicht nur die Verwendung digitaler Anzeigevorrichtungen mit derzeitigen und künftigen hohen Pixeldichten, sondern auch die Verwendung analoger Anzeigevorrichtungen mit derzeitigen und zukünftigen hohen Rasterdichten der Anzeigeelemente A(k, 1) und horizontalem und vertikalem Abstand benachbarter Anzeigeelemente A(k, 1) mit PP < 0,001 mm. Analoge Anzeigevorrichtungen mit hoher Rasterdichte dpi sind beispielsweise auf fotografischer oder drucktechnischer Grundlage bekannt, beispielsweise Laserplotter mit > 25000 dpi.

Wegen der bereits oben begründeten Vorteile der Lens Barrier Optic ist diese vorzuziehen. Eine geeignete Lens Barrier Optic hat beispielsweise folgende Parameter:

Linsendicke der plankonvexen Zylinderlinsen des Linsenrasters D' = 9,4830000 mm, optischer Brechungsindex n = 1,5, Brennweite f' = 6,3060000 mm, Scheitelhöhe h = 2,5562 mm, Brennpunktschnittweite s'f' = - 0,01600 mm. Die Lupenvergrößerung V der rückseitigen Barriere durch die plankonvexen Zylinderlinsen wird im Betrachtungsabstand A = 2491,6582 mm V = ± unendlich. Die erfindungsgemäße Lens Barrier Optic kann unverändert sowohl im Abstand D = 5,0 mm als auch D = 1,0 mm vor der Anzeigevorrichtung angeordnet werden.

Das optische Element kann, wie dem Fachmann von autostereoskopischen Displays der Autostereoskopie bekannt ist, selbstverständlich auch in Form einer Barriere, eines Zylinderlinsenrasters, eines Linsenrasters, eines Chromatic-Light-Deflector-Schirms oder in anderen Ausgestaltungen ausgeführt werden.

### Beispiel G

Im Beispiel G handelt es sich nach den Beispielen E und F um eine weitere digitale Wechselanzeige. Die digitale Anzeigevorrichtung und das optische Element sind dieselben wie im Beispiel F. Es soll gezeigt werden, wie von der Autoparallaktisch- Autostereoskopischen Anzeige eins im Beispiel F allein softwareseitig zu der Autoparallaktisch-Autostereoskopischen Anzeige zwei gewechselt werden kann. Dieser Wechselschritt hat folgende Verfahrensparameter:

Für alle Betrachtungsabstände 791 mm ≤ A ≤ unendlich sind OZ ≥ 55,286, D = 5,000 mm, C = -548 mm, RF1 = 0,500, DZ ≥ 1,636 mit VZ = 2,000, SZ = 118, ZZ = 1,0, AZ ≥ 56, (OZ/RF1)*ZZ*SZ*PP maximal = 679,466 mm. Der Parallaxenwinkel für einen kompletten Parallaxenzyklus mit totalem Verschwinden liegt bei α ≥ 51,079 Grad. Die autoparallaktische Bewegung ist im Unterschied zu den Beispielen A bis F gleichgerichtet zur Eigenbewegung. Im Nahbetrachtungsabstand NA = 791 mm beträgt die Distanz δx = 500 mm, der Fernbetrachtungsabstand liegt bei FA = 8500 mm. Das autostereoskopische Inscreening beträgt IS = -548 mm im Unterschied zu den Outscreenings in den Beispielen A bis F.

Die Höhe der aufrechten Zeichen des Textes ist nicht kleiner als 24 mm. Auf der Anzeigefläche von 1198,1 mm x 673,9 mm kann ein Textblock aus ungefähr 8 Zeilen mit einfachem Zeilenabstand und 20 Zeichen in jeder Zeile dargestellt werden.

Diese Ausgestaltung des erfindungsgemäßen Verfahrens beruht auf der Zeichnung nach Fig. 2.

Die Beispiele F und G können für den Wechsel zwischen den Autoparallaktisch-Autostereoskopischen Anzeigen eins und zwei auf ein und derselben digitalen Wechselanzeige durchgeführt werden.

Die nachfolgend beschriebenen fünf Ausführungsbeispiele zum erfindungsgemäßen Verfahren und Anordnung zur autoparallaktischen und autostereoskopischen Anzeige beschreiben weitere digitale Wechselanzeigen. Hierbei handelt es sich um softwareseitige Wechsel zwischen Autoparallaktisch-Autostereoskopischer Anzeige eins und/oder Autoparallaktisch-Autostereoskopischer Anzeige zwei und Autostereoskopischer Anzeige drei der Autostereoskopie.

### Beispiel H

Die digitale Anzeigevorrichtung der digitalen Wechselanzeige im Beispiel H besteht aus zwei 16K 54,1" LC-Displays, die im Hochformat rahmenlos nebeneinander angeordnet und betrieben werden. Die RGB Pixelabmessungen sind horizontal und vertikal PP = 0,078 mm, die Auflösung ist 15360 Pixel x 2x8640 Pixel, die aktive Fläche beträgt 1198,1 mm x 2x674,0 mm, die Anzahl der Perspektivansichten bei der Autostereoskopischen Anzeige drei beträgt PA ≤ 12, wobei mehrfach vorkommende gleiche Perspektivansichten innerhalb einer Perspektivansichtenperiode auf der Anzeigevorrichtung mitzuzählen sind.

Im Software-Modus Autoparallaktisch-Autostereoskopische Anzeige eins werden SZ = PA ± sz, sz = 0, SZ = 12, EZ = 9, ZZ = 1,0, K = 1,0 gewählt. Der Korrekturfaktor beträgt (C - D)/C = 0,998801 mit D = 10,0 mm, woraus C = 8343 mm folgt.

Für den Bereich der Betrachtungsabstände FA = 187106 mm bis NA = 41717 mm sind OZ ≥ 799,356, RF2 = 0,767, DZ ≥ 146 mit VZ = 1,0, ZZ = 1,0 auf zwei LCD, AZ ≥ 95678, (OZ/RF2)*ZZ*SZ*PP maximal = 975 mm und somit kleiner als die aktive Gesamtbreite der zwei LCD. Der Parallaxenwinkel für einen kompletten Parallaxenzyklus mit Sichtbarkeit komplementärer oder nicht vollständig komplementärer Teile liegt bei α ≥ 5,589 Grad. Im Nahbetrachtungsabstand NA beträgt die Distanz δx = 4875 mm. Das autostereoskopische Outscreening beträgt OS = 8343 mm.

In Beispiel H kann ein Zeichen mit EZ = 9 in der Größe H x B = 975 mm x 406 mm, beispielsweise ein durch die Eigenbewegung über beide Displays horizontal bewegtes Fragezeichen, angezeigt werden.

Bei Software-Umschaltung auf das Kombinationsbild der Autostereoskopischen Anzeige drei können Betrachter, die sich in der Ebene durch den optimalen Betrachtungsabstand OA = 8343 mm aufhalten, ein konventionelles dreidimensionales Bild aus 12 Perspektivansichten sehen.

### Beispiel I

Die digitale Anzeigevorrichtung der digitalen Wechselanzeige im Beispiel I ist dieselbe wie im Beispiel H, benötigt jedoch nur ein 54,1" LC-Display im Hochformat. Die Anzahl der Perspektivansichten bleibt PA ≤ 12, wobei mehrfach vorkommende gleiche Perspektivansichten innerhalb einer Perspektivansichtenperiode auf der digitalen Anzeigevorrichtung mitzuzählen sind.

Im Software-Modus Autoparallaktisch-Autostereoskopische Anzeige eins werden SZ = PA ± sz, sz = 0, SZ = 12, EZ = 9, ZZ = 1,0, K = 2,0 gewählt. Der Korrekturfaktor verändert sich zu (C - D)/C = 0,997606 mit D = 10,0 mm, woraus C = 4177 mm folgt. Das optische Element unterscheidet sich hinsichtlich seiner optischen Struktur von dem in Beispiel H.

Für den Bereich der Betrachtungsabstände FA = 93588 mm bis NA = 20883 mm sind OZ ≥ 407,861, RF2 = 0,783, DZ ≥ 72,856 mit VZ = 1,0, ZZ = 1,0, AZ ≥ 24068, (OZ/RF2)*ZZ*SZ*PP maximal = 487,5 mm und somit kleiner als die aktive Breite des LC-Displays. Der Parallaxenwinkel für einen kompletten Parallaxenzyklus mit Sichtbarkeit komplementärer oder nicht vollständig komplementärer Teile liegt bei α ≥ 5,582 Grad. Im Nahbetrachtungsabstand NA beträgt die Distanz δx = 2438 mm. Das autostereoskopische Outscreening beträgt OS = 4177 mm.

Im Beispiel I kann ein Zeichen mit EZ = 9 in der Größe H x B = 488 mm x 203 mm, beispielsweise ein durch die Eigenbewegung über das Display horizontal bewegtes Fragezeichen, angezeigt werden.

Bei Software-Umschaltung auf das Kombinationsbild der Autostereoskopischen Anzeige drei können Betrachter, die sich in der Ebene durch den optimalen Betrachtungsabstand OA = 4177 mm befinden, ein konventionelles dreidimensionales Bild aus 12 Perspektivansichten sehen.

### Beispiel J

Die digitale Anzeigevorrichtung der digitalen Wechselanzeige im Beispiel J besteht aus einem 54,1" LC-Display im Hochformat. Die RGB-Pixelabmessungen sind doppelt so groß wie in den Beispielen H und I und betragen horizontal und vertikal PP = 0,156 mm, die Auflösung ist 7640 Pixel x 4320 Pixel, die aktive Fläche beträgt 1198,1 mm x 674,0 mm. Die Anzahl der Perspektivansichten beträgt PA = 6, wobei mehrfach vorkommende gleiche Perspektivansichten innerhalb einer Perspektivansichtenperiode auf der Anzeigevorrichtung mitzuzählen sind.

Im Software-Modus Autoparallaktisch-Autostereoskopische Anzeige eins werden SZ = PA ± sz, sz = 0, SZ = 6, EZ = 5, ZZ = 1,35, K = 1,0 gewählt. Der Korrekturfaktor beträgt wie im Beispiel I (C - D)/C = 0,997606 mit D = 10,0 mm, woraus C = 4177 mm folgt. Das optische Element bleibt in jeglicher Hinsicht dasselbe wie im Beispiel I.

Für den Bereich der Betrachtungsabstände FA = 182939 mm bis NA = 20883 mm sind OZ ≥ 451,389, RF2 = 0,867, DZ ≥ 142,467 mit VZ = 1,0, ZZ = 1,35, AZ ≥ 55855, (OZ/RF2)*ZZ*SZ*PP maximal = 658 mm und somit kleiner als die aktive Breite des LC-Displays. Der Parallaxenwinkel für einen kompletten Parallaxenzyklus mit Sichtbarkeit komplementärer oder nicht vollständig komplementärer Teile liegt bei α ≥ 5,458 Grad. Im Nahbetrachtungsabstand NA beträgt die Distanz δx = 2438 mm. Das autostereoskopische Outscreening beträgt OS = 4177 mm.

Im Beispiel J kann ein Zeichen mit EZ = 5 in der Größe H x B = 975 mm x 406 mm, beispielsweise ein durch die Eigenbewegung über das Display horizontal bewegtes Fragezeichen, angezeigt werden.

Bei Software-Umschaltung auf das Kombinationsbild der Autostereoskopischen Anzeige drei können Betrachter, die sich in der Ebene durch den optimalen Betrachtungsabstand OA = 4177 mm befinden, ein konventionelles dreidimensionales Bild aus 6 Perspektivansichten sehen.

Das Beispiel J erlaubt die großen Zeichen wie im Beispiel H auf nur einem 54,1" LC-Display. Die Software-Umschaltung von Beispiel I zu Beispiel J ist ohne jede Hardwareänderung mit demselben optischen Element möglich, wenn auf dem LC-Display im Beispiel 9 softwareseitig jeweils zwei horizontal benachbarte mit zwei vertikal benachbarten Pixeln zu einem zusammengefasst werden. Die vorteilhafte Änderung des Multiplikators von K = 2,00 zu K = 1,00 ist nur bei der Autostereoskopischen Anzeige drei bedeutsam und wird mit der Umschaltung der Kombinationsbilder von selbst wirksam.

### Beispiel K

Die digitale Anzeigevorrichtung der digitalen Wechselanzeige im Beispiel K ist dieselbe wie in den Beispielen H und I. Die Anzahl der Perspektivansichten beträgt wie dort PA ≤ 12, wobei mehrfach vorkommende gleiche Perspektivansichten innerhalb einer Perspektivansichtenperiode auf der digitalen Anzeigevorrichtung mitzuzählen sind.

Im Software-Modus Autoparallaktisch-Autostereoskopische Anzeige eins werden SZ = PA ± sz, sz = 0, SZ = 12, EZ = 9, ZZ = 1,0, K = 1,48957 gewählt. Der Korrekturfaktor beträgt (C - D)/C = 0,998216, D = 10,000 mm, woraus C = 5604 mm folgt. Das optische Element unterscheidet sich hinsichtlich seiner optischen Struktur von dem in Beispiel H und I.

Für den Bereich der Betrachtungsabstände FA = 125614 mm bis NA = 28022 mm werden OZ ≥ 541,840, RF2 = 0,775, DZ ≥ 97,762 mit VZ = 1,0, ZZ = 1,0. AZ ≥ 43252, (OZ/RF2)*ZZ*SZ*PP maximal = 655 mm und somit kleiner als die aktive Breite des LC-Displays. Der Parallaxenwinkel für einen kompletten Parallaxenzyklus mit Sichtbarkeit teilweise komplementärer Teile liegt bei α ≥ 5,586 Grad. Im Nahbetrachtungsabstand NA beträgt die Distanz δx = 3258 mm. Das autostereoskopische Outscreening beträgt OS = 5604 mm.

Im Beispiel K kann ein Zeichen mit EZ = 9 in der Größe H x B = 655mm x 273mm, beispielsweise ein durch die Eigenbewegung über das Display horizontal bewegtes Fragezeichen angezeigt werden.

Bei Software-Umschaltung auf das Kombinationsbild der Autostereoskopischen Anzeige drei können Betrachter, die sich in der Ebene durch den Optimalen Betrachtungsabstand OA = 5604 mm befinden, ein konventionelles dreidimensionales Bild aus 12 Perspektivansichten sehen.

In den Ausführungsbeispielen wurden hochauflösende digitale 8K und16K Anzeigevorrichtungen verwendet, die im weltweiten Trend zu immer größerer Pixeldichte von derzeit 2K zu 4K liegen, beispielsweise das 55" 4K LED-TV UE55HU8590 von Samsung 2014. Großformatige 8K und 16K Displays sind noch nicht verfügbar, wie im Beispiel F belegt wurde. Es soll deshalb im Beispiel L gezeigt werden, dass das Verfahren wie beschrieben auch mit einer digitalen Anzeigevorrichtung aus dem Stand der Technik durchgeführt werden kann, und zwar mit einem 2K 54,1" LC-Display. Verzichtet werden soll auch hier, wie in den Beispielen H bis K, auf die ausführliche Beschreibung wie in den Beispielen A bis B.

### Beispiel L

Die digitale Anzeigevorrichtung der digitalen Wechselanzeige im Beispiel L besteht aus zwei 54,1" LC-Displays im Hochformat, die rahmenlos nebeneinander angeordnet und betrieben werden. Die RGB-Pixelabmessungen sind horizontal und vertikal PP = 0,624 mm, die Auflösung ist 1920 Pixel x 1080 Pixel, die aktive Fläche beträgt 1198,1 mm x 674,0 mm, die Anzahl der Perspektivansichten PA ≤ 12, wobei mehrfach vorkommende gleiche Perspektivansichten innerhalb einer Perspektivansichtenperiode auf der digitalen Anzeigevorrichtung mitzuzählen sind.

Im Software-Modus Autoparallaktisch-Autostereoskopische Anzeige eins werden SZ = PA ± sz, sz = 0, SZ = 12, EZ = 9, ZZ = 1,0, K = 1,0 gewählt. Der Korrekturfaktor beträgt (C - D)/C = 0,990491, D = 30,0 mm, woraus C = 3155 mm folgt. In diesem Beispiel L muss ein optisches Element mit veränderter optischer Struktur hergestellt werden.

Für den Bereich der Betrachtungsabstände FA = 181918 mm bis NA = 15775 mm sind OZ ≥ 99,826, RF2 = 0,767, DZ ≥ 17,834 mit VZ = 1,0, ZZ = 1,0 auf zwei LCD, AZ ≥ 1421, (OZ/RF2)*ZZ*SZ*PP maximal = 975 mm und somit kleiner als die aktive Gesamtbreite der zwei LC-Displays. Der Parallaxenwinkel für einen kompletten Parallaxenzyklus mit Sichtbarkeit komplementärer oder nicht vollständig komplementärer Teile liegt bei α ≥ 14,122 Grad. Im Nahbetrachtungsabstand NA beträgt die Distanz δx = 4875 mm. Das autostereoskopische Outscreening beträgt OS = 3155 mm.

In Beispiel L kann ein Zeichen mit EZ = 9 in der Größe H x B = 975 mm x 406 mm, beispielsweise ein durch die Eigenbewegung über beide Displays horizontal bewegtes Fragezeichen, angezeigt werden.

Bei Software-Umschaltung auf das Kombinationsbild der Autostereoskopischen Anzeige drei können Betrachter, die sich in der Ebene durch den optimalen Betrachtungsabstand OA = 3155 mm aufhalten, ein konventionelles dreidimensionales Bild aus 12 Perspektivansichten sehen.

Selbstverständlich kann die digitale Wechselanzeige auch eine Software-Umschaltung zwischen den Autoparallaktisch-Autostereoskopischen Anzeigen eins und/oder zwei und einem üblichen zweidimensionalen Bild, Wechsel- und/oder Bewegtbild erfolgen und/oder ein solches den Hintergrund für die Autoparallaktisch-Autostereoskopische Anzeige eins und/oder zwei bilden. Selbstverständlich sind diese zweidimensionalen Anzeigeinhalte im gesamten Bereich der Betrachtungsabstände A zwischen FA und NA sowie außerhalb dieses Bereichs sichtbar. Letzteres trifft insbesondere zu für den Bereich der Betrachtungsabstände A zwischen NA und OA.

Das Verfahren der autoparallaktisch-autostereoskopischen Visualisierung erstaunt mit seiner gegen- oder gleichgerichteten autoparallaktischen Anzeigebewegung und seinem selektiven Verschwinden. Die autostereoskopische Anzeige zeichnet sich aus durch vollständige Stereokanaltrennung und hohe Outscreenings. Die Erfindung ermöglicht den Betrachtern die Nutzung im Entfernungsbereich von einigen Dezimetern bis zu mehreren hundert Metern. Das Verfahren ermöglicht ebenfalls ohne Hardwareänderung den digitalen Wechsel zur konventionellen autostereoskopischen 3D-Darstellung. Die vielfältigen Vorteile der Erfindung sind in den Ausführungsbeispielen für analoge und digitale Anzeigen und Wechselanzeigen in DIN A4 und Diagonalen von 3,5" bis über 55" beschrieben. Visuelle Anzeigeanordnungen gemäß der Erfindung können zur Erhöhung von Attraktivität und Exklusivität ihres Standortes beitragen, beispielsweise als vertikales Fassadenelement in der Architektur. Das Verfahren profitiert ohne Erhöhung der Rechnerleistung unmittelbar vom 2K/4K/8K/16K ... > 16K-Trend der digitalen Displaytechnik und verlangt dennoch vergleichsweise geringe Rechnerkapazität.

## Patentansprüche

1. Verfahren zur autoparallaktischen und autostereoskopischen Anzeige bildarmer Anzeigeinhalte, wie Warn- oder Hinweiszeichen, Symbole, Buchstaben, Ziffern und/oder komplette Texte, mit einer digitalen Anzeigevorrichtung, bei welcher in einem Raster aus Zeilen k und Spalten 1 auf Anzeigeelementen A(k,1) Objektinformationen sichtbar gemacht werden, wobei
- die digitale Anzeigevorrichtung ein LCD oder ein OLED-Display oder ein Plasmabildschirm ist und dem Raster mit den Anzeigeelementen A(k, 1) in einem Abstand D mindestens ein optisches Element mit periodisch angeordneten optischen Strukturen vor- oder nachgeordnet wird, durch welches für das von den Anzeigeelementen A(k, 1) transmittierte oder ausgestrahlte Licht Ausbreitungsrichtungen vorgegeben werden, die durchschnittliche horizontale und/oder vertikale kleinste Periodenlänge der optischen Strukturen auf dem mindestens einen optischen Element ein ganzzahliges Vielfaches der durchschnittlichen horizontalen und/oder vertikalen Abmessung eines Anzeigeelementes A(k, 1) oder ein ganzzahliges Vielfaches des durchschnittlichen horizontalen und/oder vertikalen Abstandes benachbarter Anzeigeelemente A(k, 1), multipliziert mit einem Korrekturfaktor (C - D)/C, ist, wobei C ein definierter autostereoskopischer Betrachtungsabstand der Augen eines stereoskopischen Betrachters von der Anzeigevorrichtung ist, sodass Betrachter, die sich im optimalen Betrachtungsabstand OA, mit OA = C, befinden, beim hilfsmittelfreien binokularen Blick auf die Anzeigevorrichtung auf Grund der optischen Wechselwirkung zwischen dem optischen Element und der Anzeigevorrichtung eine autostereoskopische Wahrnehmung haben,
**dadurch gekennzeichnet, dass**
- die Anzeigevorrichtung ein 54,1" Display ohne RGB-Filter im Format B x H = 1198,1 mmm x 673,9 mm mit Anzeigeelementen mit den Abmessungen PP = 0,052 mm x 0,156 mm in der Auflösung ist 7680 Pixel x 4320 Pixel gewählt wird,
- auf der Anzeigevorrichtung Objektinformationen in Gestalt von horizontal lesbarem Text aus aufrecht orientierten Buchstaben, Ziffern, Sonderzeichen gleichabständig auf der Breite B dargestellt werden, wobei der kleinste Abstand SZ*PP ist, mit SZ einer Systemzahl, SZ = 120, und der horizontal lesbare Text aus aus EZ = 50 benachbarten Anzeigeelementen besteht,
- die Anzahl der Objekte der Gleichung OZ = OZmax*RF = (O - 1)*RF erfüllt, wobei OZ ≥ 64,500 und RF ein Reduktionsfaktor ist, RF = (1/SZ)*(EZ + (Pd/((O - 1)*PP)*(C/(A - C)))), RF = 0,5, wobei O eine optische Abtastfunktion ist, gemäß der Gleichung O = ((C*(A - D))/(D*(A - C))), mit D = 5,0 mm und C = 650,0 mm, A ein allgemeiner Betrachtungsabstand ist, mit 2500 mm ≤ A ≤ unendlich und Pd die Pupillendistanz beim Menschen ist,
- der kleinste Abstand der transparenten Streifen des optischen Elements beträgt ((CD)/C)*SZ*PP,
- die projizierte horizontale Streifenbreite SB der vertikalen transparenten Streifen des optischen Elements in der Ausführung als Parallaxbarriereschirm die Gleichung SB = VZ*PP erfüllt, wobei das Projektionszentrum im Fernbetrachtungsabstand FA mit FA=11000 mm liegt und die Projektion auf die Anzeigevorrichtung erfolgt, mit VZ = 2,0,
- DZ gemäß der Gleichung DZ = (O/SZ)*(1 + VZ) berechnet wird, wobei DZ≥3,250 ist,
- das Produkt (OZ/RF)*ZZ*SZ*PP so berechnet wird, dass es durch die nutzbare horizontale Breite B der digitalen Anzeigevorrichtung eine obere Schranke hat, wobei ZZ eine Zonenzahl ist, mit ZZ = 1, und NA der Nahbetrachtungsabstand gemäß der Definition NA ≥ 5*C ist,
so dass eine autoparallaktisch-autostereoskopische Anzeige mit der Ansichtenzahl AZ, AZ = OZ*DZ ≥ 189 erfolgt.

2. Verfahren zur autoparallaktischen und autostereoskopischen Anzeige nach Anspruch 1,
**dadurch gekennzeichnet, dass**
- als optisches Element in Betrachtungsrichtung vor der Anzeigevorrichtung eine Lens Barrier Optic angeordnet wird und die Lens Barrier Optic in Betrachtungsrichtung vorn aus einem Linsenraster und in Betrachtungsrichtung hinten auf dessen planer Rückfläche aus einer Barriere aufgebaut wird, wobei das Linsenraster ein plankonvexes Zylinderlinsenraster oder eine plankonvex-konkave optische Struktur aufweist und die konvexe Seite des Zylinderlinsenrasters bzw. die konvexe Seite der optischen Struktur in Richtung des Betrachters weisend angeordnet wird, die plankonvexen Zylinderlinsen oder die plankonvexen Linsen der plankonvex-konkaven optischen Struktur abbildungsoptisch so an die vertikalen transparenten Streifen der optischen Strukturen der Barriere angepasst sind, dass diese für den Betrachter in einem Betrachtungsabstand A, der zwischen einem Fernbetrachtungsabstand FA und einem Nahbetrachtungsabstand NA liegt, mit einer optischen Lupenvergrößerung V jeder plankonvexen Zylinderlinse oder jeder plankonvexen optischen Struktur der plankonvex-konkaven optischen Struktur nahe oder gleich ± unendlich erscheinen, wobei diese Vergrößerung V der Gleichung V = (1/(((-a/f')
- (-a/f')*(p/f') + (p/f'))))*V0 genügt, wobei f' die Brennweite der plankonvexen Zylinderlinse oder der plankonvexen optischen Struktur der plankonvex-konkaven optischen Struktur, a die Objektweite, wobei a = s'H', mit s'H' Hauptpunktabstand von der Planfläche, erfüllt wird, p der Augenabstand von der Lens Barrier Optic, wobei p = A - (D + D') gilt, mit D' als geometrische Dicke der Lens Barrier Optic, und V0 die Normalvergrößerung der Lupe bedeuten, die Scheitel jeder plankonvexen Zylinderlinse oder die Scheitel jeder plankonvexen optischen Struktur der plankonvex-konkaven optischen Struktur so zur Mitte jedes transparenten Streifens der optischen Strukturen der Barriere ausgerichtet werden, dass diese bei einer orthogonalen Parallelprojektion auf eine beliebige Ebene parallel zur Planfläche des Linsenrasters oder parallel zur Barriere an jedem Ort übereinander liegen und zur Minimierung optischer Störungen durch Planparallelplatten mit dem optischen Brechungsindex größer eins die geometrische Dicke D' der Lens Barrier Optic die Ungleichung D' < D erfüllt.

3. Verfahren nach anspruch 1 oder 2, **dadurch gekennzeichnet, dass** die Höhe der aufrechten Zeichen des Textes nicht kleiner als 47 mm ist.

4. Verfahren nach anspruch 1 bis 3, **dadurch gekennzeichnet, dass** auf der Anzeigevorrichtung ein Textblock aus 6 Zeilen mit einfachem Zeilenabstand und 9 Zeichen in jeder Zeile darstellbar sind.

5. Verfahren nach Anspruch 1 bis 4, **dadurch gekennzeichnet, dass** die autoparallaktisch-autostereoskopischen Anzeigeinhalte
- vertikal von oben nach unten und/oder von unten nach oben bewegt oder unbewegt zur Anzeige gebracht werden, oder
- als vertikal lesbare Laufschrift in einer oder mehreren Zonen mit um 90 Grad nach links und/oder rechts gekippten Zeichen aus Buchstaben, Ziffern, Sonderzeichen und/oder
- als analoge und/oder digitale Uhrzeit oder
- als horizontal lesbare Textzeile oder mehrzeiliger Textblock ein- oder mehrspaltig aus aufrecht orientierten Zeichen oder
- als japanische oder chinesische Schriftzeichen oder
- als komplexes Muster angezeigt werden.

6. Verfahren nach Anspruch 1 oder 5, **dadurch gekennzeichnet, dass** mehrere Anzeigeanordnungen rahmenlos übereinander und/oder nebeneinander kachelartig angeordnet werden und das Verfahren auf die Gesamtfläche angewendet wird oder mehrere Anzeigeanordnungen mit Abstand zueinander angeordnet werden, in denen ein gleicher Anzeigeinhalt mit einem gleichen Parallaxenwinkel α angezeigt wird und die Justierung des im Abstand D angeordneten optischen Elements jedes oder einiger der mehreren Anzeigeanordnungen relativ zur Anzeigevorrichtung in horizontaler Richtung ohne Änderung seiner azimutalen Orientierung und hinsichtlich der jeweils bei monokularem und senkrechtem Blick auf die Mitte der jeweiligen Anzeigeanordnung so durchgeführt wird, dass auf diesen Anzeigeanordnungen die Anzeigeinhalte mit unterschiedlicher Phase des Parallaxenzyklus sichtbar sind, wobei ein vollständiger Parallaxenzyklus die relative Bewegung des Anzeigeinhaltes bei einer horizontalen Bewegung des jeweiligen Betrachters in einer Richtung und parallel zur Anzeigevorrichtung entlang einer solchen Strecke bedeutet, welche in Winkelmaß mit dem Parallaxenwinkel α übereinstimmt.

7. Verfahren nach Anspruch 1 bis 6, **dadurch gekennzeichnet, dass** ein vollständiger Parallaxenzyklus der autoparallaktischen Anzeige gemäß der Gleichung für den Parallaxenwinkel α = arctan(((O - 1)*SZ*PP)/C) eingestellt wird, wobei ein vollständiger Parallaxenzyklus die relative Bewegung des Anzeigeinhaltes bei einer horizontalen Bewegung des jeweiligen Betrachters in einer Richtung und parallel zur Anzeigevorrichtung entlang einer solchen Strecke bedeutet, welche in Winkelmaß mit dem Parallaxenwinkel α übereinstimmt.

8. Verfahren nach Anspruch loder 2 **dadurch gekennzeichnet, dass** die autoparallaktische Anzeigebewegung der autoparallaktisch-autostereoskopischen Anzeige bei horizontaler und/oder vertikaler Eigenbewegung jedes Betrachters in der Geschwindigkeit entsprechend und in der Richtung entgegen- gerichtet erfolgt.

9. Verfahren zur autoparallaktischen und autostereoskopischen Anzeige bildarmer Anzeigeinhalte, wie Warn- oder Hinweiszeichen, Symbole, Buchstaben, Ziffern und/oder komplette Texte, mit einer analogen Anzeigevorrichtung, bei welcher in einem Raster aus Zeilen k und Spalten 1 auf Anzeigeelementen A(k,l) Objektinformationen sichtbar gemacht werden, wobei
- die analoge Anzeigevorrichtung ein plattenförmiges Substrat mit Bereichen unterschiedlicher optischer Transparenz ist,
- und dem Raster mit den Anzeigeelementen A(k, 1) in einem Abstand D mindestens ein optisches Element mit periodisch angeordneten optischen Strukturen vor- oder nachgeordnet wird, durch welches für das von den Anzeigeelementen A(k, 1) transmittierte oder ausgestrahlte Licht Ausbreitungsrichtungen vorgegeben werden, die durchschnittliche horizontale und/oder vertikale kleinste Periodenlänge der optischen Strukturen auf dem mindestens einen optischen Element ein ganzzahliges Vielfaches der durchschnittlichen horizontalen und/oder vertikalen Abmessung eines Anzeigeelementes A(k, 1) oder ein ganzzahliges Vielfaches des durchschnittlichen horizontalen und/oder vertikalen Abstandes benachbarter Anzeigeelemente A(k, 1), multipliziert mit einem Korrekturfaktor (C - D)/C, ist, wobei C ein definierter autostereoskopischer Betrachtungsabstand der Augen eines stereoskopischen Betrachters von der Anzeigevorrichtun ist, sodass Betrachter, die sich im optimalen Betrachtungsabstand OA, mit OA = C, befinden, beim hilfsmittelfreien binokularen Blick auf die Anzeigevorrichtung auf Grund der optischen Wechselwirkung zwischen dem optischen Element und der Anzeigevorrichtung eine autostereoskopische Wahrnehmung haben,
**dadurch gekennzeichnet, dass**
- die Anzeigevorrichtung im Format B x H = 210 mmm x 297 mm mit Anzeigeelementen mit den Abmessungen PP = 0,150 mm x 18 mm gewählt wird,
- auf der Anzeigevorrichtung Objektinformationen in Gestalt christlicher Kreuze gleichabständig auf der Breite B dargestellt werden, wobei der kleinste Abstand SZ*PP ist, mit SZ einer Systemzahl, SZ = 12, und die christlichen Kreuze aus EZ = 5 benachbarten Anzeigeelementen bestehen,
- die Anzahl der Objekte der Gleichung OZ = OZmax*RF = (O - 1)*RF erfüllt, wobei OZ ≥ 47,634 und RF ein Reduktionsfaktor ist, RF = (1/SZ)*(EZ + (Pd/((O - 1)*PP)*(C/(A - C)))), RF = 0,5, wobei O eine optische Abtastfunktion ist, gemäß der Gleichung O = ((C*(A - D))/(D*(A - C))), mit D = 2,8 mm und C = 269, 5 mm, A ein allgemeiner Betrachtungsabstand ist, mit 1924 mm ≤ A ≤ unendlich und Pd die Pupillendistanz beim Menschen ist,
- der kleinste Abstand der transparenten Streifen des optischen Elements beträgt ((CD)/C)*SZ*PP,
- die projizierte horizontale Streifenbreite SB der vertikalen transparenten Streifen des optischen Elements in der Ausführung als Parallaxbarriereschirm die Gleichung SB = VZ*PP erfüllt, wobei das Projektionszentrum im Fernbetrachtungsabstand FA mit FA=41000 mm liegt und die Projektion auf die Anzeigevorrichtung erfolgt, mit VZ = 0,587,
- DZ gemäß der Gleichung DZ = (O/SZ)*(1 + VZ) berechnet wird, wobei DZ ≥ 12,732 ist,
- das Produkt (OZ/RF)*ZZ*SZ*PP so berechnet wird, dass es durch die nutzbare horizontale Breite B der analogen Anzeigevorrichtung eine obere Schranke hat, wobei ZZ eine Zonenzahl ist, mit ZZ = 1, und NA der Nahbetrachtungsabstand gemäß der Definition NA ≥ 5*C ist,
so dass eine autoparallaktisch-autostereoskopische Anzeige mit der Ansichtenzahl AZ, AZ = OZ*DZ ≥ 606 erfolgt.

10. Verfahren nach Anspruch 9, **dadurch gekennzeichnet, dass** das christliche Kreuz die Maße 83 mm x 204 mm aufweist.

## Claims

1. Method for the auto-parallactic and auto-stereoscopic display of low-image display content, such as warning or information signs, symbols, letters, numbers and / or complete texts, with a digital display device in which in a grid of lines k and columns 1 on display elements A (k, 1) object information is made visible, whereby
- The digital display device is an LCD or an OLED display or a plasma screen and the grid with the display elements A (k, 1) is arranged upstream or downstream of at least one optical element with periodically arranged optical structures at a distance D, by which for the light propagation directions transmitted or emitted by the display elements A (k, 1) are specified, the average horizontal and / or vertical smallest period length of the optical structures on the at least one optical element is an integral multiple of the average horizontal and / or vertical dimension of a display element A (k, 1) or an integer multiple of the average horizontal and / or vertical distance between adjacent display elements A (k, 1), multiplied by a correction factor (C - D) / C, where C is a defined autostereoscopic viewing distance of the eyes of a stereoscopic viewer from the display prec direction, so that viewers who are at the optimal viewing distance OA, with OA = C, have an autostereoscopic perception when looking at the display device without aids, due to the optical interaction between the optical element and the display device,
**characterized in that**
- The display device is a 54.1 "display without RGB filter in the format W x H = 1198.1 mm x 673.9 mm with display elements with the dimensions PP = 0.052 mm x 0.156 mm with a resolution of 7680 pixels x 4320 pixels ,
- Object information is displayed on the display device in the form of horizontally readable text made up of upright letters, numbers, special characters, equidistantly spaced on width B, the smallest distance being SZ * PP, with SZ a system number, SZ = 120, and the horizontally readable text consists of EZ = 50 adjacent display elements,
- the number of objects in the equation OZ = OZmax * RF = (O - 1) * RF is fulfilled, where OZ ≥ 64,500 and RF is a reduction factor, RF = (1/SZ) * (EZ + (Pd / ((O - 1) * PP) * (C / (A - C)))), RF = 0.5, where O is an optical scanning function, according to the equation O = ((C * (A - D)) / (D * (A - C))), with D = 5.0 mm and C = 650.0 mm, A is a general viewing distance, with 2500 mm ≤ A ≤ infinity and Pd is the pupillary distance in humans,
- the smallest distance between the transparent strips of the optical element is ((C-D) / C) * SZ * PP,
- The projected horizontal stripe width SB of the vertical transparent stripes of the optical element in the execution as a parallax barrier screen fulfills the equation SB = VZ * PP, whereby the projection center lies in the distance viewing distance FA with FA = 11000mm and the projection takes place on the display device with VZ = 2 , 0,
- DZ is calculated according to the equation DZ = (O / SZ) * (1 + VZ), where DZ ≥ 3.250.
- the product (OZ / RF) * ZZ * SZ * PP is calculated in such a way that it has an upper limit due to the usable horizontal width B of the digital display device, where ZZ is a zone number, with ZZ = 1, and NA is the close-up viewing distance according to the definition NA ≥ 5 * C,
so that an autoparallactic-autostereoscopic display with the number of views AZ, AZ = OZ * DZ ≥ 189 takes place.

2. A method for auto parallactic and auto stereoscopic display according to claim 1, **characterized in that**
- A lens barrier optic is arranged as an optical element in the viewing direction in front of the display device and the lens barrier optic is constructed from a lens grid in the viewing direction at the front and a barrier on its flat rear surface in the viewing direction at the rear, the lens grid being a plano-convex cylindrical lens grid or a plano-convex Has concave optical structure and the convex side of the cylindrical lens grid or the convex side of the optical structure is arranged pointing in the direction of the viewer, the plano-convex cylinder lenses or the plano-convex lenses of the plano-convex-concave optical structure image-optically so on the vertical transparent strips of the optical structures of the Barrier are adapted so that these for the observer at a viewing distance A, which is between a distance viewing distance FA and a close viewing distance NA, with an optical magnification V of each plano-convex cylinder lens or each plano-convex optical structure of the plano-convex-concave optical structure appear close to or equal to ± infinity, this magnification V of the equation V = (1 / (((- a / f') - (-a / f) * (p / f') + (p / f)))) * V0 is sufficient, where f'is the focal length of the plano-convex Cylindrical lens or the plano-convex optical structure of the plano-convex-concave optical structure, a the object distance, where a = s'H', with s'H' main point distance from the plane surface, is fulfilled, p the eye relief from the lens barrier optics, where p = A - (D + D') applies, with D' being the geometric thickness of the lens barrier optic, and V0 being the normal magnification of the magnifying glass, the apex of each plano-convex cylinder lens or the apex of every plano-convex optical structure of the plano-convex-concave optical structure towards the center each transparent strip of the optical structures of the barrier are aligned so that they are in an orthogonal parallel projection on any plane parallel to the plane surface of the lenticular or parallel to the barrier lie on top of each other at every location and to minimize optical interference from plane-parallel plates with an optical refractive index greater than one, the geometric thickness D 'of the lens barrier optic satisfies the inequality D' <D.

3. The method according to claim 1 or 2, **characterized in that** the height of the upright characters of the text is not less than 47 mm.

4. The method according to claim 1 to 3, **characterized in that** a text block of 6 lines with single line spacing and 9 characters in each line can be displayed on the display device.

5. The method according to claim 1 to 4, **characterized in that** the autoparallactic autostereoscopic display content
- are moved vertically from top to bottom and / or from bottom to top or are brought to the display without moving, or
- as vertically readable ticker in one or more zones with characters made up of letters, numbers, special characters and / or tilted 90 degrees to the left and / or right
- as analog and / or digital time or
- as a horizontally readable text line or multi-line text block in one or more columns of upright characters or
- as Japanese or Chinese characters or
- Displayed as a complex pattern.

6. The method according to claim 1 or 5, **characterized in that** several display arrangements are framelessly arranged one above the other and / or side by side in tile-like manner and the method is applied to the entire area or several display arrangements are arranged at a distance from one another in which the same display content with the same parallax angle α is displayed and the adjustment of the optical element arranged at the distance D of each or some of the plurality of display arrangements relative to the display device in the horizontal direction without changing its azimuthal orientation and with regard to the monocular and perpendicular view of the center of the respective display arrangement is carried out in such a way that the display contents with different phases of the parallax cycle are visible on these display arrangements, a complete parallax cycle being the relative movement of the display contents with a horizontal movement of the respective viewer s means in one direction and parallel to the display device along such a distance which corresponds in angular measure to the parallax angle α.

7. The method according to claim 1 to 6, **characterized in that** a complete parallax cycle of the auto-parallax display according to the equation for the parallax angle α = arctan (((O - 1) * SZ * PP) / C) is set, with a complete parallax cycle means the relative movement of the display content with a horizontal movement of the respective viewer in one direction and parallel to the display device along a distance which corresponds in angular measure to the parallax angle α.

8. The method according to claim 1 or 2, **characterized in that** the auto-parallactic display movement of the auto-parallactic-autostereoscopic display with horizontal and / or vertical proper movement of each viewer takes place correspondingly in speed and in the opposite direction.

9. Method for the auto-parallactic and auto-stereoscopic display of low-image display content, such as warning or information signs, symbols, letters, numbers and / or complete texts, with an analog display device in which in a grid of lines k and columns l on display elements A (k, l) object information is made visible, whereby
- The analog display device is a plate-shaped substrate with areas of different optical transparency and the grid with the display elements A (k, l) at a distance D is upstream or downstream of at least one optical element with periodically arranged optical structures, through which for the Display elements A (k, l) transmitted or emitted light propagation directions are specified, the average horizontal and / or vertical smallest period length of the optical structures on the at least one optical element is an integral multiple of the average horizontal and / or vertical dimension of a display element A (k, l) or an integer multiple of the average horizontal and / or vertical distance between adjacent display elements A (k, 1), multiplied by a correction factor (C - D) / C, where C is a defined autostereoscopic viewing distance of the eyes of a stereoscopic Betrac hters from the display device, so that viewers who are at the optimal viewing distance OA, with OA = C, have an autostereoscopic perception when looking at the display device without aids due to the optical interaction between the optical element and the display device,
**characterized in that**
- the display device in the format W x H = 210 mm x 297 mm with display elements with the dimensions PP = 0.150 mm x 18 mm is selected,
- object information in the form of Christian crosses is shown equidistantly on the display device on the width B, the smallest distance being SZ * PP, with SZ a system number, SZ = 12, and the Christian crosses consist of EZ = 5 adjacent display elements,
- the number of objects fulfills the equation OZ = OZmax * RF = (O - 1) * RF, where OZ ≥ 47.634 and RF is a reduction factor, RF = (1 / SZ) * (EZ + (Pd / ((O - 1) * PP) * (C / (A - C)))), RF = 0.5, where O is an optical scanning function, according to the equation O = ((C * (A - D)) / (D * (A - C))), with D = 2.8 mm and C = 269.5 mm, A is a general viewing distance, with 1924 mm ≤ A ≤ infinity and Pd is the interpupillary distance in humans,
- the smallest distance between the transparent strips of the optical element is ((C - D) / C) * SZ * PP,
- The projected horizontal stripe width SB of the vertical transparent stripes of the optical element in the execution as a parallax barrier screen satisfies the equation SB = VZ * PP, the projection center being in the distance viewing distance FA with FA = 41000 mm and the projection onto the display device with VZ = 0.587,
- DZ is calculated according to the equation DZ = (O / SZ) * (1 + VZ), where DZ ≥ 12.732,
- the product (OZ / RF) * ZZ * SZ * PP is calculated in such a way that it has an upper limit due to the usable horizontal width B of the analog display device, where ZZ is a zone number, with ZZ = 1, and NA is the close-up viewing distance according to the definition NA ≥ 5 * C,
so that an autoparallactic-autostereoscopic display with the view number AZ AZ = OZ * DZ ≥ 606 takes place.

10. The method according to claim 9, **characterized in that** the Christian cross which has dimensions of 83 mm x 204 mm.

## Revendications

1. Méthode d'affichage auto-parallactique et auto-stéréoscopique du contenu d'affichage à faible image, tel que panneaux d'avertissement ou d'information, symboles, lettres, chiffres et / ou textes complets, avec un dispositif d'affichage numérique dans lequel, dans une grille de lignes k et colonnes l sur les éléments d'affichage Les informations sur l'objet A (k, l) sont rendues visibles, de sorte que
- le dispositif d'affichage numérique est un écran LCD ou OLED ou un écran plasma et la grille avec les éléments d'affichage A (k, l) à une distance D est en amont ou en aval d'au moins un élément optique avec des structures optiques disposées périodiquement, à travers qui pour les directions de propagation de la lumière transmises ou émises par les éléments d'affichage A (k, l) sont spécifiées, la plus petite longueur de période horizontale et / ou verticale moyenne des structures optiques sur au moins un élément optique est un multiple entier de la moyenne dimension horizontale et / ou verticale d'un élément d'affichage A (k, l)ou un multiple entier de la distance horizontale et / ou verticale moyenne entre les éléments d'affichage adjacents A (k, l), multiplié par un facteur de correction (C - D) / C, où C est une distance de vision autostéréoscopique définie des yeux d'un visionneuse stéréoscopique depuis le dispositif d'affichage Pour que les téléspectateurs qui se trouvent à la distance de vision optimale OA, avec OA = C, aient une perception autostéréoscopique lorsqu'ils regardent le dispositif d'affichage sans aides, en raison de l'interaction optique entre l'élément optique et le dispositif d'affichage,
**caractérisé en ce que**
- Le dispositif d'affichage est un écran de 54,1 "sans filtre RVB au format L x H = 1198,1 mm x 673,9 mm avec des éléments d'affichage aux dimensions PP = 0,052 mm x 0,156 mm avec une résolution de 7680 pixels x 4320 pixels,
- Les informations sur l'objet sont affichées sur le dispositif d'affichage sous forme de texte lisible horizontalement composé de lettres verticales, de chiffres, de caractères spéciaux, espacés de manière équidistante sur la largeur B, la plus petite distance étant SZ * PP, avec SZ un numéro de système, SZ = 120, et le texte lisible horizontalement se compose de EZ = 50 éléments d'affichage adjacents,
- le nombre d'objets dans l'équation OZ = OZmax * RF = (O - 1) * RF est rempli, où OZ ≥ 64500 et RF est un facteur de réduction, RF = (1 / SZ) * (EZ + (Pd / ((O - 1) * PP) * (C / (A - C)))), RF = 0,5, où O est une fonction de balayage optique, selon l'équation O = ((C * (A - D)) / (D * (A - C))), avec D = 5,0 mm et C = 650,0 mm, A est une distance de vision générale, avec 2500 mm ≤ A ≤ infini et Pd est la distance pupillaire chez l'homme,
- la plus petite distance entre les bandes transparentes de l'élément optique est ((C-D) / C) * SZ * PP,
- La largeur de bande horizontale projetée SB des bandes transparentes verticales de l'élément optique dans l'exécution comme écran à barrière de parallaxe satisfait l'équation SB = VZ * PP, le centre de projection étant dans la distance de vision FA avec FA = 11000 mm et le la projection a lieu sur le dispositif d'affichage avec VZ = 2, 0,
- DZ est calculé selon l'équation DZ = (O / SZ) * (1 + VZ), où DZ ≥ 3,250.
- le produit (OZ / RF) * ZZ * SZ * PP est calculé de manière à avoir une limite supérieure en raison de la largeur horizontale utilisable B du dispositif d'affichage numérique, où ZZ est un numéro de zone, avec ZZ = 1 , et NA est la distance de vision rapprochée selon la définition NA ≥ 5 * C,
de sorte qu'un affichage autoparallactique-autostéréoscopique avec le nombre de vues AZ, AZ = OZ * DZ ≥ 189 a lieu.

2. Procédé d'affichage auto parallactique et auto stéréoscopique selon la revendication 1, **caractérisé en ce que**
- une optique de barrière de lentille est agencée comme un élément optique dans la direction de visualisation devant le dispositif d'affichage et l'optique de barrière de lentille est construite à partir d'une grille de lentille dans la direction de visualisation à l'avant et d'une barrière sur sa surface arrière plate lors de la visualisation. direction arrière, la grille de lentille étant une grille de lentille cylindrique piano-convexe ou piano-convexe A une structure optique concave et le côté convexe de la grille de lentille cylindrique ou le côté convexe de la structure optique est disposé pointant dans la direction du spectateur, les lentilles cylindriques plano-convexes ou les lentilles piano-convexes de la structure optique plano-convexe-concave image-optiquement ainsi sur les bandes transparentes verticales des structures optiques de la barrière sont adaptées de sorte qu'elles soient pour l'observateur à un distance de vision A, qui est entre une distance de vision FA et une distance de vision proche NA, avec un grossissement optique V de chaque lentille cylindrique plan-convexe ou chaque structure optique plano-convexe de la structure optique plano-convexe-concave apparaît proche ou égale à ± l'infini, ce grossissement V de l'équation
V = (1/(((- a / f') - (-a / f') ^{∗} (p / f') + (p / f')))) ^{∗} V0 est suffisant, où f' est la focale longueur de la lentille cylindrique plan-convexe ou de la structure optique plan-convexe de la structure optique plan-convexe-concave, a la distance de l'objet, où a = s'H ', avec s'H' distance du point principal de la surface plane , est rempli, p le dégagement oculaire de l'optique de barrière de lentille, où p = A - (D + D') s'applique, avec D' étant l'épaisseur géométrique de l'optique de barrière de lentille, et V0 étant le grossissement normal de la loupe , le sommet de chaque lentille cylindrique plan-convexe ou le sommet de chaque structure optique plan-convexe de la structure optique plan-convexe-concave vers le centre, chaque bande transparente des structures optiques de la barrière sont alignées de manière à ce qu'elles soient dans un projection parallèle orthogonale sur tout plan parallèle à la surface plane du lenticulaire ou parallèle à la barrière
se superposent à chaque emplacement et pour minimiser les interférences optiques des plaques parallèles planes avec un indice de réfraction optique supérieur à un, l'épaisseur géométrique D 'de l'optique de barrière de lentille satisfait l'inégalité D' <D.

3. Procédé selon la revendication 1 ou 2, **caractérisé en ce que** la hauteur des caractères droits du texte n'est pas inférieure à 47 mm.

4. Procédé selon la revendication 1 à 3, **caractérisé en ce qu'**un bloc de texte de 6 lignes à interligne simple et 9 caractères dans chaque ligne peut être affiché sur le dispositif d'affichage.

5. Procédé selon la revendication 1 à 4, **caractérisé en ce que** l'autoparallactique contenu d'affichage autostéréoscopique
- sont déplacés verticalement de haut en bas et / ou de bas en haut ou sont amenés à l'écran sans bouger, ou
- comme ticker lisible verticalement dans une ou plusieurs zones avec des caractères composés de lettres, de chiffres, de caractères spéciaux et / ou inclinés de 90 degrés vers la gauche et / ou la droite
- comme heure analogique et / ou numérique ou
- sous forme de ligne de texte lisible horizontalement ou de bloc de texte multiligne dans une ou plusieurs colonnes de caractères verticaux ou
- en caractères japonais ou chinois ou
- S'affiche sous la forme d'un motif complexe.

6. Procédé selon la revendication 1 ou 5, **caractérisé en ce que** plusieurs agencements d'affichage sont disposés sans cadre l'un au-dessus de l'autre et / ou côte à côte à la manière d'un carreau et le procédé est appliqué à toute la zone ou plusieurs agencements d'affichage sont agencés. à une distance l'un de l'autre dans laquelle le même contenu d'affichage avec le même angle de parallaxe α est affiché et le réglage de l'élément optique disposé à une distance D de chacun ou de certains de la pluralité d'agencements d'affichage par rapport au dispositif d'affichage à l'horizontale direction sans changer son orientation azimutale et en ce qui concerne la vue monoculaire et perpendiculaire du centre de l'agencement d'affichage respectif est réalisée de telle manière que le contenu d'affichage avec différentes phases du cycle de parallaxe soit visible sur ces agencements d'affichage, un affichage complet cycle de parallaxe étant le mouvement relatif du contenu d'affichage avec un mouvement horizontal de l'observateur respectif s signifie dans un sens et parallèle au dispositif d'affichage le long d'une telle distance qui correspond en mesure angulaire à l'angle de parallaxe a.

7. Procédé selon la revendication 1 à 6, **caractérisé en ce qu'**un cycle de parallaxe complet de l'affichage auto-parallaxe selon l'équation de l'angle de parallaxe α = arctan (((O - 1) ^{∗} SZ ^{∗} PP) / C) est réglé, avec un cycle de parallaxe complet, le mouvement relatif du contenu d'affichage avec un mouvement horizontal du spectateur respectif dans une direction et parallèle au dispositif d'affichage le long d'une telle distance qui correspond en mesure angulaire à l'angle de parallaxe a.

8. Procédé selon la revendication 1 ou 2, **caractérisé en ce que** le mouvement d'affichage auto-parallactique de l'affichage auto-parallactique-autostéréoscopique avec mouvement propre horizontal et / ou vertical de chaque spectateur s'effectue en correspondance en vitesse et en sens inverse.

9. Méthode d'affichage auto-parallactique et auto-stéréoscopique de contenus d'affichage à faible image, tels que panneaux d'avertissement ou d'information, symboles, lettres, chiffres et / ou textes complets, avec un dispositif d'affichage analogique dans lequel, dans une grille de lignes k et colonnes l sur les éléments d'affichage Les informations sur l'objet A (k, l) sont rendues visibles, de sorte que
- le dispositif d'affichage analogique est un substrat en forme de plaque avec des zones de transparence optique différente et la grille avec les éléments d'affichage A (k, 1) à une distance D est en amont ou en aval d'au moins un élément optique avec des structures optiques disposées périodiquement, à travers laquelle pour les éléments d'affichage A (k, l) les directions de propagation de la lumière transmise ou émise sont spécifiées, la plus petite longueur de période horizontale et / ou verticale moyenne des structures optiques sur au moins un élément optique est un multiple entier de l'horizontale moyenne et / ou dimension verticale d'un élément d'affichage A (k, 1) ou un multiple entier de la distance horizontale et / ou verticale moyenne entre les éléments d'affichage adjacents A (k, 1), multipliée par un facteur de correction (C - D) / C, où C est une distance de vision autostéréoscopique définie des yeux d'un Betrac stéréoscopique hters du dispositif d'affichage, de sorte que les téléspectateurs qui se trouvent à la distance de vision optimale OA, avec OA = C, aient une perception autostéréoscopique lorsqu'ils regardent le dispositif d'affichage sans aides, en raison de l'interaction optique entre l'élément optique et le dispositif d'affichage,
**caractérisé en ce que**
- le dispositif d'affichage au format L x H = 210 mm x 297 mm avec des éléments d'affichage aux dimensions PP = 0,150 mm x 18 mm est sélectionné,
- les informations sur l'objet sous la forme de croix chrétiennes sont affichées de manière équidistante sur la largeur B sur le dispositif d'affichage, où la plus petite distance est SZ ^{∗} PP, avec SZ un numéro de système, SZ = 12, et les croix chrétiennes se composent de EZ = 5 adjacent éléments d'affichage,
- le nombre d'objets répond à l'équation OZ = OZmax ^{∗} RF = (O - 1) ^{∗} RF, où OZ ≥ 47,634 et RF est un facteur de réduction, RF = (1 / SZ) ^{∗} (EZ + (Pd / ((O - 1) ^{∗} PP) ^{∗} (C / (A - C)))), RF = 0,5, où O est une fonction de balayage optique, selon l'équation O = ((C ^{∗} (A - D)) / (D ^{∗} (A - C))), avec D = 2,8 mm et C = 269,5 mm, A est une distance d'observation générale, avec 1924 mm ≤ A ≤ infini et Pd est la distance interpupillaire chez l'homme,
- la plus petite distance entre les bandes transparentes de l'élément optique est ((C - D) / C) ^{∗} SZ ^{∗} PP,
- La largeur de bande horizontale projetée SB des bandes transparentes verticales de l'élément optique dans l'exécution comme écran à barrière de parallaxe satisfait l'équation SB = VZ ^{∗} PP, le centre de projection étant à la distance de vision FA avec FA = 41000 mm et le projection sur le dispositif d'affichage avec VZ = 0,587,
- DZ est calculé selon l'équation DZ = (O / SZ) ^{∗} (1 + VZ), où DZ ≥ 12,732,
- le produit (OZ / RF) ^{∗} ZZ ^{∗} SZ ^{∗} PP est calculé de manière à avoir une limite supérieure en raison de la largeur horizontale utilisable B du dispositif d'affichage analogique, où ZZ est un numéro de zone, avec ZZ = 1 , et NA est la distance de vision rapprochée selon la définition NA ≥ 5 ^{∗} C,
de sorte qu'un affichage autoparallactique-autostéréoscopique avec le nombre de vues AZ, AZ = OZ ^{∗} DZ ≥ 606 a lieu.

10. Procédé selon la revendication 9, **caractérisé en ce que** la croix chrétienne qui a des dimensions de 83 mm x 204 mm.
